# EUROPEAN PATENT APPLICATION

(11) **EP 4 669 022 A1**
(43) Date of publication of application: **24.12.2025**
(21) Application number: 24756151.7
(22) Date of filing: 06.02.2024
(51) Int. Cl.: H04W 76/28

(54) **SIGNAL TRANSMISSION METHOD AND APPARATUS, AND STORAGE MEDIUM**

(30) Priority: 17.02.2023 CN 202310154218
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); LUO, Chen, Beijing 100085 (CN); SU, Yuwan, Beijing 100085 (CN)
(74) Representative: Studio Torta S.p.A.
(86) International application number: PCT/CN2024/076256
(87) International publication number: WO 2024/169778

(57) **Abstract**

Provided by the present disclosure are a signal transmission method and apparatus, and a storage medium. The method comprises: determining whether the moment of termination of signal transmission executed by a terminal is later than the moment of termination of an activation period of discontinuous transmission by a base station, and obtaining a first determination result; and on the basis of the first determination result and the type of the signal transmission, executing a corresponding operation on the signal transmission.

## Description

### CROSS-REFERENCES TO RELATED APPLICATIONS

The present application claims priority to Chinese Patent Application No. 202310154218.1 filed on February 17, 2023, entitled "Signal Transmission Method and Apparatus, and Storage Medium", which is hereby incorporated by reference in its entirety.

### FIELD

The present application relates to the field of communications, and in particular, to methods and apparatuses for signal transmission, and a storage medium.

### BACKGROUND

As commonly acknowledged, energy consumption is a main indicator of an operating expense (OPEX) of an operator. In new radio (NR) R18, a project of network energy-saving is established to mainly consider a standardization scheme of the network energy-saving. According to operator data, an operating expense of energy consumption in a mobile network accounts for about 23% of a total operating expense, and a vast majority of the energy consumption comes from a wireless access network, especially in an active antenna unit (AAU). At present, the energy consumption of a fifth generation mobile communication technology (5G) network is about 2-3 timings of the energy consumption of a fourth generation mobile communication technology (4G) network. Therefore, the research on energy-saving technology for the energy consumption of 5G network is urgent.

Regarding energy-saving solutions for networks, they include multiple aspects such as time domain, frequency domain, spatial domain, and power domain, etc. The time-domain energy-saving scheme includes energy-saving technologies for discontinuous transmission (DTX) and discontinuous reception (DRX) for base stations. When the energy-saving technology for the base station is configured as DTX, there may be multiple interpretations of subsequent transmissions between the terminal and the base station after the DTX activity period is terminated. Once there is a misunderstanding, it will affect the transmission performance of the system, including throughput, latency, etc., leading to an increase in system energy consumption.

### BRIEF SUMMARY

Embodiments of the present application provide methods and apparatuses for signal transmission, and a storage medium to solve the problem of high network energy consumption in the related art.

Embodiments of the present application provide a method for signal transmission, performed by a terminal, including:
determining whether a termination timing of a signal transmission performed by a terminal is later than a termination timing of a discontinuous transmission (DTX) activity period of a base station, and obtaining a first determination result; and
performing a corresponding operation on the signal transmission based on the first determination result and a type of the signal transmission.

In some embodiments, performing the corresponding operation on the signal transmission based on the first determination result and the type of the signal transmission includes:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DRX activity period transmission performed by the terminal based on the second determination result.

In some embodiments, performing the corresponding operation on the DRX activity period transmission performed by the terminal based on the second determination result includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, continuing to perform the DRX activity period transmission; and/or,
in case that the second determination result is that the reset timing of the inactivity timer of the DRX performed by the terminal is later than the termination timing of the DTX activity period of the base station, interrupting or suspending the DRX activity period transmission.

In some embodiments, suspending the DRX activity period transmission includes:
suspending the inactivity timer within a DTX inactivity period of the base station; and/or,
suspending a DRX activity period transmission within a timing duration of the inactivity timer within a DTX inactivity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is later than the termination timing of the DTX activity period of the base station, continuing to perform a DRX activity period transmission suspended within a timing duration of the inactivity timer within the DTX activity period of the base station.

In some embodiments, interrupting the DRX activity period transmission includes:
interrupting the inactivity timer within a DTX inactivity period of the base station; and/or,
interrupting a DRX activity period transmission within a timing duration of the inactivity timer within a DTX inactivity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is later than the termination timing of the DTX activity period of the base station, restarting a new DRX activity period transmission within a timing duration of the inactivity timer within the DTX activity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, performing one or more of the following operations:
terminating the inactivity timer within a DTX inactivity period of the base station;
not performing uplink data transmission within a DTX inactivity period of the base station;
not performing downlink data transmission within a DTX inactivity period of the base station;
suspending the inactivity timer within a DTX inactivity period of the base station; or
suspending a DRX activity period transmission within a timing duration of the inactivity timer within a DTX inactivity period of the base station.

In some embodiments, performing the corresponding operation on the signal transmission based on the first determination result and the type of the signal transmission includes:
in case that the first determination result is that the termination timing of the signal transmission is later than the termination timing of the DTX activity period of the base station, and the type of the signal transmission is one or more of the following types, continuing to perform, interrupt or suspend the signal transmission:
physical downlink control channel (PDCCH) skipping transmission;
semi-persistent scheduling (SPS) transmission;
configured grant (CG) transmission;
physical random access channel (PRACH) transmission; or
paging transmission.

In some embodiments, performing the corresponding operation on the signal transmission based on the first determination result and the type of the signal transmission further includes:
in case that the first determination result is that the termination timing of the signal transmission is later than the termination timing of the DTX activity period of the base station, and the type of the signal transmission is PDCCH skipping transmission, determining that the termination timing of the DTX activity period of the base station is not earlier than the termination timing of the signal transmission.

In some embodiments, interrupting the signal transmission includes:
interrupting the signal transmission within a DTX inactivity period of the base station; and/or,
interrupting the signal transmission within the DTX activity period of the base station.

In some embodiments, after interrupting the signal transmission, the method further includes:
restarting a new signal transmission within the DTX activity period of the base station.

In some embodiments, suspending the signal transmission includes:
suspending the signal transmission within a DRX inactivity period of the base station.

In some embodiments, after suspending the signal transmission, the method further includes:
continuing to perform the suspended signal transmission within the DTX activity period of the base station.

In some embodiments, the termination timing of the signal transmission includes one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

Embodiments of the present application provide a method for signal transmission, performed by a base station, including:
determining whether a termination timing of a signal transmission performed by a terminal is later than a termination timing of a discontinuous transmission (DTX) activity period of a base station, and obtaining a first determination result; and
performing a corresponding operation on a DTX activity period transmission performed by the base station based on the first determination result and a type of the signal transmission.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DTX activity period transmission performed by the base station based on the second determination result.

In some embodiments, performing the corresponding operation on the DTX activity period transmission performed by the base station based on the second determination result includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, adjusting the termination timing of the DTX activity period to be no earlier than a first timing; and
in case that the second determination result is that the reset timing of the inactivity timer of the DRX performed by the terminal is later than the termination timing of the DTX activity period of the base station, continuing to perform a DTX inactivity period transmission of the base station.

In some embodiments, the first timing satisfies one or more of the following conditions:
not earlier than a termination timing of a DRX activity period performed by the terminal; or
later than the termination timing of the DTX activity period of the base station and earlier than a termination timing of a DRX activity period performed by the terminal.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is one or more of the following types, performing the corresponding operation on the DTX activity period transmission performed by the base station:
physical downlink control channel (PDCCH) skipping transmission;
semi-persistent scheduling (SPS) transmission;
configured grant (CG) transmission;
physical random access channel (PRACH) transmission; or
paging transmission.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, continuing to perform a DTX inactivity period transmission of the base station.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is PDCCH skipping transmission, notifying the terminal that the termination timing of the DTX activity period of the base station is not earlier than a termination timing of the PDCCH skipping transmission of the terminal.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is not PDCCH skipping transmission, adjusting the termination timing of the DTX activity period of the base station to be no earlier than a termination timing of a corresponding signal transmission.

In some embodiments, the termination timing of the signal transmission includes one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

Embodiments of the present application provide a terminal, including a memory, a transceiver, and a processor, where
the memory is used for storing a computer program; the transceiver is used for transmitting and receiving data under control of the processor; and the processor is used for reading the computer program in the memory and performing the following operations:
determining whether a termination timing of a signal transmission performed by a terminal is later than a termination timing of a discontinuous transmission (DTX) activity period of a base station, and obtaining a first determination result; and
performing a corresponding operation on the signal transmission based on the first determination result and a type of the signal transmission.

In some embodiments, performing the corresponding operation on the signal transmission based on the first determination result and the type of the signal transmission includes:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DRX activity period transmission performed by the terminal based on the second determination result.

In some embodiments, performing the corresponding operation on the DRX activity period transmission performed by the terminal based on the second determination result includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, continuing to perform the DRX activity period transmission; and/or,
in case that the second determination result is that the reset timing of the inactivity timer of the DRX performed by the terminal is later than the termination timing of the DTX activity period of the base station, interrupting or suspending the DRX activity period transmission.

In some embodiments, suspending the DRX activity period transmission includes:
suspending the inactivity timer within a DTX inactivity period of the base station; and/or,
suspending a DRX activity period transmission within a timing duration of the inactivity timer within a DTX inactivity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is later than the termination timing of the DTX activity period of the base station, continuing to perform a DRX activity period transmission suspended within a timing duration of the inactivity timer within the DTX activity period of the base station.

In some embodiments, interrupting the DRX activity period transmission includes:
interrupting the inactivity timer within a DTX inactivity period of the base station; and/or,
interrupting a DRX activity period transmission within a timing duration of the inactivity timer within a DTX inactivity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is later than the termination timing of the DTX activity period of the base station, restarting a new DRX activity period transmission within a timing duration of the inactivity timer within the DTX activity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, performing one or more of the following operations:
terminating the inactivity timer within a DTX inactivity period of the base station;
not performing uplink data transmission within a DTX inactivity period of the base station;
not performing downlink data transmission within a DTX inactivity period of the base station;
suspending the inactivity timer within a DTX inactivity period of the base station; or
suspending a DRX activity period transmission within a timing duration of the inactivity timer within a DTX inactivity period of the base station.

In some embodiments, performing the corresponding operation on the signal transmission based on the first determination result and the type of the signal transmission includes:
in case that the first determination result is that the termination timing of the signal transmission is later than the termination timing of the DTX activity period of the base station, and the type of the signal transmission is one or more of the following types, continuing to perform, interrupt or suspend the signal transmission:
physical downlink control channel (PDCCH) skipping transmission;
semi-persistent scheduling (SPS) transmission;
configured grant (CG) transmission;
physical random access channel (PRACH) transmission; or
paging transmission.

In some embodiments, performing the corresponding operation on the signal transmission based on the first determination result and the type of the signal transmission further includes:
in case that the first determination result is that the termination timing of the signal transmission is later than the termination timing of the DTX activity period of the base station, and the type of the signal transmission is PDCCH skipping transmission, determining that the termination timing of the DTX activity period of the base station is not earlier than the termination timing of the signal transmission.

In some embodiments, interrupting the signal transmission includes:
interrupting the signal transmission within a DTX inactivity period of the base station; and/or,
interrupting the signal transmission within the DTX activity period of the base station.

In some embodiments, after interrupting the signal transmission, the method further includes:
restarting a new signal transmission within the DTX activity period of the base station.

In some embodiments, suspending the signal transmission includes:
suspending the signal transmission within a DRX inactivity period of the base station.

In some embodiments, after suspending the signal transmission, the method further includes:
continuing to perform the suspended signal transmission within the DTX activity period of the base station.

In some embodiments, the termination timing of the signal transmission includes one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

Embodiments of the present application provide a base station, including a memory, a transceiver, and a processor, where
the memory is used for storing a computer program; the transceiver is used for transmitting and receiving data under control of the processor; and the processor is used for reading the computer program in the memory and performing the following operations:
determining whether a termination timing of a signal transmission performed by a terminal is later than a termination timing of a discontinuous transmission (DTX) activity period of a base station, and obtaining a first determination result; and
performing a corresponding operation on a DTX activity period transmission performed by the base station based on the first determination result and a type of the signal transmission.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DTX activity period transmission performed by the base station based on the second determination result.

In some embodiments, performing the corresponding operation on the DTX activity period transmission performed by the base station based on the second determination result includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, adjusting the termination timing of the DTX activity period to be no earlier than a first timing; and
in case that the second determination result is that the reset timing of the inactivity timer of the DRX performed by the terminal is later than the termination timing of the DTX activity period of the base station, continuing to perform a DTX inactivity period transmission of the base station.

In some embodiments, the first timing satisfies one or more of the following conditions:
not earlier than a termination timing of a DRX activity period performed by the terminal; or
later than the termination timing of the DTX activity period of the base station and earlier than a termination timing of a DRX activity period performed by the terminal.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is one or more of the following types, performing the corresponding operation on the DTX activity period transmission performed by the base station:
physical downlink control channel (PDCCH) skipping transmission;
semi-persistent scheduling (SPS) transmission;
configured grant (CG) transmission;
physical random access channel (PRACH) transmission; or
paging transmission.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, continuing to perform a DTX inactivity period transmission of the base station.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is PDCCH skipping transmission, notifying the terminal that the termination timing of the DTX activity period of the base station is not earlier than a termination timing of the PDCCH skipping transmission of the terminal.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is not PDCCH skipping transmission, adjusting the termination timing of the DTX activity period of the base station to be no earlier than a termination timing of a corresponding signal transmission.

In some embodiments, the termination timing of the signal transmission includes one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

Embodiments of the present application provide an apparatus for signal transmission, including:
a first determining module, used for determining whether a termination timing of a signal transmission performed by a terminal is later than a termination timing of a discontinuous transmission (DTX) activity period of a base station, and obtaining a first determination result; and
a first performing module, used for performing a corresponding operation on the signal transmission based on the first determination result and a type of the signal transmission.

In some embodiments, performing the corresponding operation on the signal transmission based on the first determination result and the type of the signal transmission includes:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DRX activity period transmission performed by the terminal based on the second determination result.

In some embodiments, performing the corresponding operation on the DRX activity period transmission performed by the terminal based on the second determination result includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, continuing to perform the DRX activity period transmission; and/or,
in case that the second determination result is that the reset timing of the inactivity timer of the DRX performed by the terminal is later than the termination timing of the DTX activity period of the base station, interrupting or suspending the DRX activity period transmission.

In some embodiments, suspending the DRX activity period transmission includes:
suspending the inactivity timer within a DTX inactivity period of the base station; and/or,
suspending a DRX activity period transmission within a timing duration of the inactivity timer within a DTX inactivity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is later than the termination timing of the DTX activity period of the base station, continuing to perform a DRX activity period transmission suspended within a timing duration of the inactivity timer within the DTX activity period of the base station.

In some embodiments, interrupting the DRX activity period transmission includes:
interrupting the inactivity timer within a DTX inactivity period of the base station; and/or,
interrupting a DRX activity period transmission within a timing duration of the inactivity timer within a DTX inactivity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is later than the termination timing of the DTX activity period of the base station, restarting a new DRX activity period transmission within a timing duration of the inactivity timer within the DTX activity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, performing one or more of the following operations:
terminating the inactivity timer within a DTX inactivity period of the base station;
not performing uplink data transmission within a DTX inactivity period of the base station;
not performing downlink data transmission within a DTX inactivity period of the base station;
suspending the inactivity timer within a DTX inactivity period of the base station; or
interrupting a DRX activity period transmission within a timing duration of the inactivity timer within a DTX inactivity period of the base station.

In some embodiments, performing the corresponding operation on the signal transmission based on the first determination result and the type of the signal transmission includes:
in case that the first determination result is that the termination timing of the signal transmission is later than the termination timing of the DTX activity period of the base station, and the type of the signal transmission is one or more of the following types, continuing to perform, interrupt or suspend the signal transmission:
physical downlink control channel (PDCCH) skipping transmission;
semi-persistent scheduling (SPS) transmission;
configured grant (CG) transmission;
physical random access channel (PRACH) transmission; or
paging transmission.

In some embodiments, performing the corresponding operation on the signal transmission based on the first determination result and the type of the signal transmission further includes:
in case that the first determination result is that the termination timing of the signal transmission is later than the termination timing of the DTX activity period of the base station, and the type of the signal transmission is PDCCH skipping transmission, determining that the termination timing of the DTX activity period of the base station is not earlier than the termination timing of the signal transmission.

In some embodiments, interrupting the signal transmission includes:
interrupting the signal transmission within a DTX inactivity period of the base station; and/or,
interrupting the signal transmission within the DTX activity period of the base station.

In some embodiments, after interrupting the signal transmission, the method further includes:
restarting a new signal transmission within the DTX activity period of the base station.

In some embodiments, suspending the signal transmission includes:
suspending the signal transmission within a DRX inactivity period of the base station.

In some embodiments, after suspending the signal transmission, the method further includes:
continuing to perform the suspended signal transmission within the DTX activity period of the base station.

In some embodiments, the termination timing of the signal transmission includes one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

Embodiments of the present application provide an apparatus for signal transmission, including:
a second determining module, used for determining whether a termination timing of a signal transmission performed by a terminal is later than a termination timing of a discontinuous transmission (DTX) activity period of a base station, and obtaining a first determination result; and
a second performing module, used for performing a corresponding operation on a DTX activity period transmission performed by the base station based on the first determination result and a type of the signal transmission.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DTX activity period transmission performed by the base station based on the second determination result.

In some embodiments, performing the corresponding operation on the DTX activity period transmission performed by the base station based on the second determination result includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, adjusting the termination timing of the DTX activity period to be no earlier than a first timing; and
in case that the second determination result is that the reset timing of the inactivity timer of the DRX performed by the terminal is later than the termination timing of the DTX activity period of the base station, continuing to perform a DTX inactivity period transmission of the base station.

In some embodiments, the first timing satisfies one or more of the following conditions:
not earlier than a termination timing of a DRX activity period performed by the terminal; or
later than the termination timing of the DTX activity period of the base station and earlier than a termination timing of a DRX activity period performed by the terminal.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is one or more of the following types, performing the corresponding operation on the DTX activity period transmission performed by the base station:
physical downlink control channel (PDCCH) skipping transmission;
semi-persistent scheduling (SPS) transmission;
configured grant (CG) transmission;
physical random access channel (PRACH) transmission; or
paging transmission.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, continuing to perform a DTX inactivity period transmission of the base station.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is PDCCH skipping transmission, notifying the terminal that the termination timing of the DTX activity period of the base station is not earlier than a termination timing of the PDCCH skipping transmission of the terminal.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is not PDCCH skipping transmission, adjusting the termination timing of the DTX activity period of the base station to be no earlier than a termination timing of a corresponding signal transmission.

In some embodiments, the termination timing of the signal transmission includes one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

Embodiments of the present application further provide a processor-readable storage medium storing a computer program, where the computer program is used to cause a processor to perform any step of the methods for signal transmission as described above.

Embodiments of the present application further provide a computer-readable storage medium storing a computer program, where the computer program is used to cause a computer to perform any step of the methods for signal transmission as described above.

Embodiments of the present application further provide a communication device-readable storage medium storing a computer program, where the computer program is used to cause a communication device to perform any step of the methods for signal transmission as described above.

Embodiments of the present application further provide a chip product-readable storage medium storing a computer program, where the computer program is used to cause a chip product to perform any step of the methods for signal transmission as described above.

In the methods and apparatuses for signal transmission, and the storage medium provided in embodiments of the present application, in case that the termination timing of the signal transmission of the terminal is later than the termination timing of the DTX activity period of the base station, the terminal may perform different operations in different conditions, which not only avoids the impact on system transmission performance caused by inconsistent understanding between the terminal and the base station, but also improves signal transmission performance and reduces energy consumption of the base station.

### BRIEF DESCRIPTION OF THE DRAWINGS

To illustrate solutions in the embodiments of the present application more clearly, the drawings need to be used in the descriptions of the embodiments are briefly described below. The drawings in the following description are some embodiments of the present application, and other drawings may be obtained based on these drawings without any creative work for those skilled in the art.
FIG. 1 is a first schematic flowchart of a method for signal transmission according to an embodiment of the present application;
FIG. 2 is a first exemplary transmission diagram of a DRX activity period of a terminal according to an embodiment of the present application;
FIG. 3 is a second exemplary transmission diagram of a DRX activity period of a terminal according to an embodiment of the present application;
FIG. 4 is a third exemplary transmission diagram of a DRX activity period of a terminal according to an embodiment of the present application;
FIG. 5 is a first exemplary transmission diagram of adjusting DTX and/or DRX by a base station according to an embodiment of the present application;
FIG. 6 is a first exemplary transmission diagram of PDCCH skipping transmission of a terminal according to an embodiment of the present application;
FIG. 7 is a second exemplary transmission diagram of PDCCH skipping transmission of a terminal according to an embodiment of the present application;
FIG. 8 is a second exemplary transmission diagram of adjusting DTX and/or DRX by a base station according to an embodiment of the present application;
FIG. 9 is an exemplary diagram of RACH transmission scenario 1 according to an embodiment of the present application;
FIG. 10 is an exemplary diagram of RACH transmission scenario 2 according to an embodiment of the present application;
FIG. 11 is an exemplary diagram of paging transmission scenario 1 according to an embodiment of the present application;
FIG. 12 is an exemplary diagram of paging transmission scenario 2 according to an embodiment of the present application;
FIG. 13 is a second schematic flowchart of a method for signal transmission according to an embodiment of the present application;
FIG. 14 is a schematic structural diagram of a terminal according to an embodiment of the present application;
FIG. 15 is a schematic structural diagram of a base station according to an embodiment of the present application;
FIG. 16 is a first schematic structural diagram of an apparatus for signal transmission according to an embodiment of the present application; and
FIG. 17 is a second schematic structural diagram of an apparatus for signal transmission according to an embodiment of the present application.

### DETAILED DESCRIPTION

Regarding energy-saving solutions for networks, they include multiple aspects such as time domain, frequency domain, spatial domain, and power domain, etc. In the time-domain energy-saving scheme, DTX and DRX energy-saving technologies for base stations are included. When the energy-saving technology for the base station is configured as discontinuous transmission (DTX) and/or discontinuous reception (DRX), some existing signals, channels, and timers will be affected by the DTX and/or DRX activity period transmission when the DTX and/or DRX activity period transmission ends. When the energy-saving technology for the base station is configured as DTX, there may be multiple interpretations of subsequent transmissions between the terminal and the base station after the DTX activity period is terminated. Once there is a misunderstanding, it will affect the transmission performance of the system, including throughput, latency, etc., leading to an increase in system energy consumption.

In response to this, embodiments of the present application provide a solution for the transmission impact of partial signals, channels, and timers after the end of the DTX and/or DRX activity period transmission of the base station.

To clarify the objectives, solutions, and advantages of the embodiments of the present application, a clear and complete description of the solutions in the embodiments of the present application is provided below in conjunction with the accompanying drawings. These embodiments are only a part of the embodiments of the present application, and not all of the embodiments. All other embodiments obtained by those skilled in the art based on the embodiments of the present application without any creative work belong to the scope of the present application.

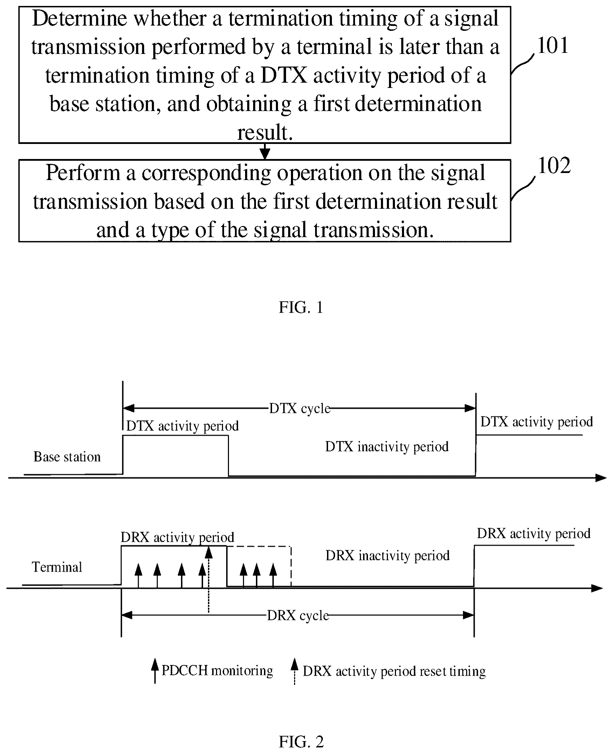

FIG. 1 is a first schematic flowchart of a method for signal transmission according to an embodiment of the present application. As shown in FIG. 1, embodiments of the present application provide a method for signal transmission, which is performed by a terminal, such as a mobile phone, etc. The method includes the following steps.

Step 101: determining whether a termination timing of a signal transmission performed by a terminal is later than a termination timing of a discontinuous transmission (DTX) activity period of a base station, and obtaining a first determination result.

In an embodiment, in case that the base station is configured with DTX and/or discontinuous reception (DRX) energy-saving technology, the terminal determines whether the termination timing of the first transmission performed by the terminal is later than the termination timing of the DTX activity period of the base station.

The first transmission performed by the terminal is the signal transmission performed by the terminal. The first transmission is at least one of DRX activity period transmission, physical downlink control channel (PDCCH) skipping transmission, semi-persistent scheduling (SPS) transmission, configured grant (CG) transmission, physical random access channel (PRACH) transmission, or paging transmission. The termination timing is either an end timing or a timeout timing.

For example, the terminal determines that the termination timing of the SPS transmission performed is later than the termination timing of the DTX activity period of the base station, and obtains the first determination result.

For another example, the terminal determines that the termination timing of the PDCCH skipping transmission performed is not later than the termination timing of the DRX activity period of the base station, and obtains the first determination result.

Step 102, performing a corresponding operation on the signal transmission based on the first determination result and a type of the signal transmission.

In an embodiment, in case that the first determination result is that the termination timing of the first transmission is later than the termination timing of the DTX and/or DRX activity period of the base station, the terminal performs operations such as interrupting, suspending, or continuing signal transmission based on the type of the signal transmission.

For example, when the base station is configured with DTX and/or DRX energy-saving technology, and the terminal is configured with PDCCH skipping transmission, and in case that the termination timing of the PDCCH skipping transmission of the terminal is later than the termination timing of the DTX and/or DRX activity period of the base station, the terminal continues PDCCH skipping transmission, interrupts PDCCH skipping transmission, or suspends PDCCH skipping transmission.

For another example, when the base station is configured with DTX and/or DRX energy-saving technology and performs RACH transmission, and in case that the termination timing of the RACH transmission occasion is later than the termination timing of the DTX and/or DRX activity period of the base station, the terminal continues RACH transmission, interrupt RACH transmission, or suspend RACH transmission.

In the method for signal transmission provided in embodiments of the present application, in case that the termination timing of the signal transmission of the terminal is later than the termination timing of the DTX activity period of the base station, the terminal performs different operations in different conditions, which not only avoids the impact on system transmission performance caused by inconsistent understanding between the terminal and the base station, but also improves signal transmission performance and reduces energy consumption of the base station.

In some embodiments, performing the corresponding operation on the signal transmission based on the first determination result and the type of the signal transmission includes:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DRX activity period transmission performed by the terminal based on the second determination result.

In an embodiment, in case that the termination timing of the first transmission is later than the termination timing of the DTX and/or DRX activity period of the base station, and the first transmission is a DRX activity period transmission, the terminal needs to determine whether the reset timing or termination timing of the inactivity timer of the DRX performed by the terminal is later than the termination timing of the DTX activity period of the base station.

In case that the reset timing of the inactivity timer of the DRX performed by the terminal is not later than the termination timing of the DTX activity period of the base station, or the termination timing of the inactivity timer of the DRX performed by the terminal is later than the termination timing of the DTX activity period of the base station, the terminal may continue the DRX activity period transmission. The base station adjusts the termination timing of the DTX activity period to be not earlier than the first timing, which satisfies at least one of the following conditions: not earlier than the termination timing of the DRX activity period of the terminal, or later than the termination timing of the DTX activity period of the base station and earlier than the termination timing of the DRX activity period of the terminal.

In case that the reset timing of the inactivity timer of the DRX performed by the terminal is later than the termination timing of the DTX activity period of the base station, the terminal may interrupt or suspend the DRX activity period transmission, and the base station continues to perform DTX and/or DRX inactivity period transmission.

In the method for signal transmission provided in embodiments of the present application, in case that the termination timing of the terminal signal transmission is later than the termination timing of the DTX activity period of the base station, and the type of the signal transmission is DRX activity period transmission, the terminal may perform different operations in different conditions, which not only avoids the impact on system transmission performance caused by inconsistent understanding between the terminal and the base station, but also improves signal transmission performance and reduces energy consumption of the base station.

In some embodiments, performing the corresponding operation on the DRX activity period transmission performed by the terminal based on the second determination result includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, continuing to perform the DRX activity period transmission; and/or,
in case that the second determination result is that the reset timing of the inactivity timer of the DRX performed by the terminal is later than the termination timing of the DTX activity period of the base station, interrupting or suspending the DRX activity period transmission.

In an embodiment, in case that the reset timing of the inactivity timer of the DRX performed by the terminal is not later than the termination timing of the DTX activity period of the base station, or the termination timing of the inactivity timer of the DRX performed by the terminal is later than the termination timing of the DTX activity period of the base station, the terminal may continue the DRX activity period transmission. The base station adjusts the termination timing of the DTX activity period to be not earlier than the first timing.

In case that the reset timing of the inactivity timer of the DRX performed by the terminal is later than the termination timing of the DTX activity period of the base station, the terminal may interrupt or suspend the DRX activity period transmission, and the base station continues to perform DTX and/or DRX inactivity period transmission.

For example, in case that the reset timing of the DRX activity period of the terminal is not later than the termination timing of the DTX and/or DRX activity period of the base station, the terminal continues to perform the DRX activity period transmission. The base station adjusts the termination timing of the DTX activity period to be not earlier than the first timing.

For another example, in case that the reset timing of the DRX activity period of the terminal is later than the termination timing of the DTX and/or DRX activity period of the base station, the terminal performs the transmission scheme of the DRX inactivity period of the terminal. The terminal suspends the inactivity timer within the DTX and/or DRX inactivity period of the base station, and/or suspends the DRX activity period transmission within the inactivity timer period, and the base station continues to perform the DTX and/or DRX inactivity period transmission.

For another example, in case that the reset timing of the DRX activity period of the terminal is later than the termination timing of the DTX and/or DRX activity period of the base station, the terminal performs the transmission scheme of the DRX inactivity period of the terminal. The terminal interrupts the inactivity timer within the DTX and/or DRX inactivity period of the base station, and/or interrupts the DRX activity period transmission within the inactivity timer period, and the base station continues to perform the DTX and/or DRX inactivity period transmission.

In the method for signal transmission provided in embodiments of the present application, in case that the termination timing of the terminal signal transmission is later than the termination timing of the DTX activity period of the base station, and the type of the signal transmission is DRX activity period transmission, the terminal may perform different operations in different conditions, which not only avoids the impact on system transmission performance caused by inconsistent understanding between the terminal and the base station, but also improves signal transmission performance and reduces energy consumption of the base station.

In some embodiments, suspending the DRX activity period transmission includes:
suspending the inactivity timer within a DTX inactivity period of the base station; and/or,
suspending a DRX activity period transmission within a timing duration of the inactivity timer within a DTX inactivity period of the base station.

In an embodiment, in case that the reset timing of the DRX activity period of the terminal is later than the termination timing of the DTX and/or DRX activity period of the base station, the terminal performs the transmission scheme of the DRX inactivity period of the terminal. The terminal suspends the DRX activity period transmission within the DTX and/or DRX inactivity period of the base station, and the base station continues to perform the transmission of DTX and/or DRX within the inactivity period.

Suspending the DRX activity period transmission includes: suspending the inactivity timer within a DTX inactivity period of the base station, and/or suspending a DRX activity period transmission within a timing duration of the inactivity timer within a DTX inactivity period of the base station. The inactivity timer is used to determine the DTX and/or DRX activity period.

In the method for signal transmission provided in embodiments of the present application, in case that the termination timing of the terminal signal transmission is later than the termination timing of the DTX activity period of the base station, and the type of the signal transmission is DRX activity period transmission, the terminal may suspend transmission under certain conditions, which not only avoids the impact on system transmission performance caused by inconsistent understanding between the terminal and the base station, but also improves signal transmission performance and reduces energy consumption of the base station.

In some embodiments, performing the corresponding operation on the DRX activity period transmission performed by the terminal based on the second determination result further includes:
in case that the second determination result is that the reset timing of the inactivity timer of the DRX performed by the terminal is later than the termination timing of the DTX activity period of the base station, continuing to perform a DRX activity period transmission suspended within a timing duration of the inactivity timer within the DTX activity period of the base station.

In an embodiment, in case that the reset timing of the DRX activity period of the terminal is later than the termination timing of the DTX and/or DRX activity period of the base station, the terminal performs the transmission scheme of the DRX inactivity period of the terminal. The terminal suspends the DRX activity period transmission within the DTX and/or DRX inactivity period of the base station, and the base station continues to perform the transmission of DTX and/or DRX within the inactivity period. Then, within the DTX and/or DRX activity period of the base station, the terminal may continue to perform the DRX activity period transmission of the terminal within the duration of the suspended inactivity timer of the DRX of the terminal. Suspending transmission is equivalent to pausing transmission. Continuing to perform the suspended transmission may be understood as restoring the paused transmission.

In the method for signal transmission provided in embodiments of the present application, in case that the termination timing of the terminal signal transmission is later than the termination timing of the DTX activity period of the base station, and the type of the signal transmission is DRX activity period transmission, the terminal may suspend transmission under certain conditions, which not only avoids the impact on system transmission performance caused by inconsistent understanding between the terminal and the base station, but also improves signal transmission performance and reduces energy consumption of the base station.

In some embodiments, interrupting the DRX activity period transmission includes:
interrupting the inactivity timer within a DTX inactivity period of the base station; and/or,
interrupting a DRX activity period transmission within a timing duration of the inactivity timer within a DTX inactivity period of the base station.

In an embodiment, in case that the reset timing of the DRX activity period of the terminal is later than the termination timing of the DTX and/or DRX activity period of the base station, the terminal performs the transmission scheme of the DRX inactivity period of the terminal. The terminal interrupts the DRX activity period transmission within the DTX and/or DRX inactivity period of the base station, and the base station continues to perform the transmission of DTX and/or DRX within the inactivity period.

Interrupting the DRX activity period transmission includes: interrupting the inactivity timer within a DTX inactivity period of the base station; and/or, interrupting a DRX activity period transmission within a timing duration of the inactivity timer within a DTX inactivity period of the base station. Interrupt transmission may be understood as terminating transmission.

In the method for signal transmission provided in embodiments of the present application, in case that the termination timing of the terminal signal transmission is later than the termination timing of the DTX activity period of the base station, and the type of the signal transmission is DRX activity period transmission, the terminal may interpret transmission under certain conditions, which not only avoids the impact on system transmission performance caused by inconsistent understanding between the terminal and the base station, but also improves signal transmission performance and reduces energy consumption of the base station.

In some embodiments, performing the corresponding operation on the DRX activity period transmission performed by the terminal based on the second determination result further includes:
in case that the second determination result is that the reset timing of the inactivity timer of the DRX performed by the terminal is later than the termination timing of the DTX activity period of the base station, restarting a new DRX activity period transmission within a timing duration of the inactivity timer within the DTX activity period of the base station.

In an embodiment, in case that the reset timing of the DRX activity period of the terminal is later than the termination timing of the DTX and/or DRX activity period of the base station, the terminal performs the transmission scheme of the DRX inactivity period of the terminal. The terminal interrupts the DRX activity period transmission within the DTX and/or DRX inactivity period of the base station, and the base station continues to perform the transmission of DTX and/or DRX within the inactivity period. Then, within the DTX and/or DRX activity period of the base station, the terminal may restart new DRX activity period transmission of the terminal within the inactivity timer of the DRX of the terminal.

In the method for signal transmission provided in embodiments of the present application, in case that the termination timing of the terminal signal transmission is later than the termination timing of the DTX activity period of the base station, and the type of the signal transmission is DRX activity period transmission, the terminal may interpret transmission under certain conditions, which not only avoids the impact on system transmission performance caused by inconsistent understanding between the terminal and the base station, but also improves signal transmission performance and reduces energy consumption of the base station.

In some embodiments, performing the corresponding operation on the DRX activity period transmission performed by the terminal based on the second determination result further includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, performing one or more of the following operations:
terminating the inactivity timer within a DTX inactivity period of the base station;
not performing uplink data transmission within a DTX inactivity period of the base station;
not performing downlink data transmission within a DTX inactivity period of the base station;
suspending the inactivity timer within a DTX inactivity period of the base station; or
suspending a DRX activity period transmission within a timing duration of the inactivity timer within a DTX inactivity period of the base station.

In an embodiment, in case that the reset timing of the inactivity timer of the DRX performed by the terminal is not later than the termination timing of the DTX activity period of the base station, or the termination timing or timeout timing of the inactivity timer of the DRX performed by the terminal is later than the termination timing of the DTX activity period of the base station, the terminal continues to perform the DRX activity period transmission. The terminal may interrupt or suspend transmission within the DTX and/or DRX inactivity period of the base station.

The terminal may interrupt transmission within the DTX and/or DRX inactivity period of the base station, which includes: terminating the inactivity timer within the DTX and/or DRX inactivity period of the base station, not performing uplink data transmission within the DTX and/or DRX inactivity period of the base station, and not performing downlink data transmission within the DTX and/or DRX inactivity period of the base station. The terminal may suspend transmission within the DTX and/or DRX inactivity period of the base station, which includes: suspending the inactivity timer within the DTX and/or DRX inactivity period of the base station, and/or suspending a DRX activity period transmission within a timing duration of the inactivity timer within a DTX and/or DRX inactivity period of the base station.

In the method for signal transmission provided in embodiments of the present application, in case that the termination timing of the terminal signal transmission is later than the termination timing of the DTX activity period of the base station, and the type of the signal transmission is DRX activity period transmission, the terminal may continue to transmit under certain conditions, which not only avoids the impact on system transmission performance caused by inconsistent understanding between the terminal and the base station, but also improves signal transmission performance and reduces energy consumption of the base station.

In some embodiments, performing the corresponding operation on the signal transmission based on the first determination result and the type of the signal transmission includes:
in case that the first determination result is that the termination timing of the signal transmission is later than the termination timing of the DTX activity period of the base station, and the type of the signal transmission is one or more of the following types, continuing to perform, interrupt or suspend the signal transmission:
physical downlink control channel (PDCCH) skipping transmission;
semi-persistent scheduling (SPS) transmission;
configured grant (CG) transmission;
physical random access channel (PRACH) transmission; or
paging transmission.

In an embodiment, in case that the base station is configured with DTX and/or DRX energy-saving technology, the terminal determines whether the termination timing of the first transmission performed by the terminal is later than the termination timing of the DTX activity period of the base station. The first transmission may be at least one of DRX activity period transmission, PDCCH skipping transmission, SPS transmission, CG transmission, PRACH transmission, or paging transmission.

In case that the termination timing of the first transmission is later than the termination timing of the DTX activity period of a base station, and the first transmission is at least one of PDCCH skipping transmission, SPS transmission, CG transmission, PRACH transmission, or paging transmission, the terminal may perform operations such as continuing transmission, interrupting transmission, and suspending transmission.

For example, in case that the termination timing of the paging transmission occasion is later than the termination timing of the DTX and/or DRX activity period of the base station, the terminal continues to perform paging transmission according to the configured paging transmission occasion. The base station adjusts the termination timing of the DTX and/or DRX activity period to be not earlier than the termination timing of the paging transmission occasion.

For another example, in case that the termination timing of the paging transmission occasion is later than the termination timing of the DTX and/or DRX activity period of the base station, the terminal performs terminal paging transmission according to the configured DTX and/or DRX configuration of the base station, and suspends paging transmission within the DTX and/or DRX inactivity period of the base station. The suspended paging transmission is continued within the DTX and/or DRX activity period of the base station.

For another example, in case that the termination timing of the paging transmission occasion is later than the termination timing of the DTX and/or DRX activity period of the base station, the terminal performs terminal paging transmission according to the configured DTX and/or DRX configuration of the base station, and interrupts paging transmission within the DTX and/or DRX inactivity period of the base station. A new paging transmission is restarted within the DTX and/or DRX activity period of the base station.

In the method for signal transmission provided in embodiments of the present application, in case that the termination timing of the terminal signal transmission is later than the termination timing of the DTX activity period of the base station, and the type of the signal transmission is PDCCH skipping transmission, SPS transmission, CG transmission, PRACH transmission, or paging transmission, the terminal may perform corresponding transmission operations under certain conditions, which not only avoids the impact on system transmission performance caused by inconsistent understanding between the terminal and the base station, but also improves signal transmission performance and reduces energy consumption of the base station.

In some embodiments, performing the corresponding operation on the signal transmission based on the first determination result and the type of the signal transmission further includes:
in case that the first determination result is that the termination timing of the signal transmission is later than the termination timing of the DTX activity period of the base station, and the type of the signal transmission is PDCCH skipping transmission, determining that the termination timing of the DTX activity period of the base station is not earlier than the termination timing of the signal transmission.

In an embodiment, in case that the termination timing of the transmission occasion of PDCCH skipping transmission is later than the termination timing of the DTX and/or DRX activity period of the base station, the terminal may continue to perform PDCCH skipping transmission. The base station may notify the terminal through signaling that the termination timing of the DTX and/or DRX activity period of the base station is not earlier than the termination timing of the PDCCH skipping transmission of the terminal. The terminal may also directly determine, without relying on the signaling of the base station, that the termination timing of the DTX and/or DRX activity period of the base station is not earlier than the termination timing of the PDCCH skipping transmission of the terminal.

In the method for signal transmission provided in embodiments of the present application, in case that the termination timing of the terminal signal transmission is later than the termination timing of the DTX activity period of the base station, and the type of the signal transmission is PDCCH skipping transmission, the terminal may continue to transmit under certain conditions, which not only avoids the impact on system transmission performance caused by inconsistent understanding between the terminal and the base station, but also improves signal transmission performance and reduces energy consumption of the base station.

In some embodiments, interrupting the signal transmission includes:
interrupting the signal transmission within a DTX inactivity period of the base station; and/or,
interrupting the signal transmission within the DTX activity period of the base station.

In an embodiment, in case that the termination timing of the terminal signal transmission is later than the termination timing of the DTX activity period of the base station, and the type of the signal transmission is PDCCH skipping transmission, SPS transmission, CG transmission, PRACH transmission, or paging transmission, the terminal may perform the operation of interrupting signal transmission within the DTX and/or DRX inactivity period of the base station.

Interrupting signal transmission includes: interrupting signal transmission within the DTX and/or DRX inactivity period of the base station, and/or interrupting signal transmission within the DTX and/or DRX activity period of the base station.

For example, in case that the termination timing of the activated SPS transmission is later than the termination timing of the DTX and/or DRX activity period of the base station, the terminal performs SPS transmission according to the configured DTX and/or DRX configuration of the base station. Within the DTX and/or DRX inactivity period of the base station, the activated SPS transmission is interrupt and deactivated.

In the method for signal transmission provided in embodiments of the present application, in case that the termination timing of the terminal signal transmission is later than the termination timing of the DTX activity period of the base station, and the type of the signal transmission is PDCCH skipping transmission, SPS transmission, CG transmission, PRACH transmission, or paging transmission, the terminal may interpret transmission under certain conditions, which not only avoids the impact on system transmission performance caused by inconsistent understanding between the terminal and the base station, but also improves signal transmission performance and reduces energy consumption of the base station.

In some embodiments, after interrupting the signal transmission, the method further includes:
restarting a new signal transmission within the DTX activity period of the base station.

In an embodiment, in case that the termination timing of the terminal signal transmission is later than the termination timing of the DTX activity period of the base station, and the type of the signal transmission is PDCCH skipping transmission, SPS transmission, CG transmission, PRACH transmission, or paging transmission, the terminal may perform the operation of interrupting signal transmission within the DTX and/or DRX inactivity period of the base station. Within the DTX and/or DRX activity period of the base station, the terminal may restart new signal transmission.

In case that the termination timing of signal transmission at the terminal is later than the termination timing of the DTX activity period of the base station, and the type of the signal transmission is SPS transmission and/or CG transmission, the terminal may perform the operation of interrupting signal transmission within the DTX and/or DRX inactivity period of the base station. Within the DTX and/or DRX activity period of the base station, the terminal may restart new signal transmission or maintain interrupted signal transmission without any other operations.

For example, in case that the termination timing of the activated CG transmission is later than the termination timing of the DTX and/or DRX activity period of the base station, the terminal performs CG transmission according to the configured DTX and/or DRX configuration of the base station. Within the DTX and/or DRX inactivity period of the base station, the activated CG transmission is interrupt and deactivated. Within the DTX and/or DRX activity period of the base station, the terminal may restart new activated CG transmission or have no operation.

In the method for signal transmission provided in embodiments of the present application, in case that the termination timing of the terminal signal transmission is later than the termination timing of the DTX activity period of the base station, and the type of the signal transmission is PDCCH skipping transmission, SPS transmission, CG transmission, PRACH transmission, or paging transmission, the terminal may interpret transmission under certain conditions, which not only avoids the impact on system transmission performance caused by inconsistent understanding between the terminal and the base station, but also improves signal transmission performance and reduces energy consumption of the base station.

In some embodiments, suspending the signal transmission includes:
suspending the signal transmission within a DRX inactivity period of the base station.

In an embodiment, in case that the termination timing of the terminal signal transmission is later than the termination timing of the DTX activity period of the base station, and the type of the signal transmission is PDCCH skipping transmission, SPS transmission, CG transmission, PRACH transmission, or paging transmission, the terminal may perform the operation of suspending signal transmission within the DTX and/or DRX inactivity period by the base station.

Suspending signal transmission includes: suspending signal transmission within the DTX and/or DRX inactivity period of the base station, and/or suspending signal transmission within the DTX and/or DRX activity period transmission of the base station.

For example, in case that the termination timing of the RACH transmission occasion is later than the termination timing of the DTX and/or DRX activity period of the base station, the terminal performs RACH transmission according to the configured DTX and/or DRX configuration of the base station. Within the DTX and/or DRX inactivity period of the base station, interruptions may suspend RACH transmission.

In the method for signal transmission provided in embodiments of the present application, in case that the termination timing of the terminal signal transmission is later than the termination timing of the DTX activity period of the base station, and the type of the signal transmission is PDCCH skipping transmission, SPS transmission, CG transmission, PRACH transmission, or paging transmission, the terminal may suspend transmission under certain conditions, which not only avoids the impact on system transmission performance caused by inconsistent understanding between the terminal and the base station, but also improves signal transmission performance and reduces energy consumption of the base station.

In some embodiments, after suspending the signal transmission, the method further includes:
continuing to perform the suspended signal transmission within the DTX activity period of the base station.

In an embodiment, in case that the termination timing of the terminal signal transmission is later than the termination timing of the DTX activity period of the base station, and the type of the signal transmission is PDCCH skipping transmission, SPS transmission, CG transmission, PRACH transmission, or paging transmission, the terminal may perform the operation of suspending signal transmission within the DTX and/or DRX inactivity period by the base station. Within the DTX and/or DRX activity period of the base station, the terminal may continue to perform the suspended signal transmission.

For example, in case that the termination timing of the RACH transmission occasion is later than the termination timing of the DTX and/or DRX activity period of the base station, the terminal performs RACH transmission according to the configured DTX and/or DRX configuration of the base station. Within the DTX and/or DRX inactivity period of the base station, the terminal may suspend RACH transmission. Within the DTX and/or DRX activity period of the base station, the terminal may continue the suspended RACH transmission.

In the method for signal transmission provided in embodiments of the present application, in case that the termination timing of the terminal signal transmission is later than the termination timing of the DTX activity period of the base station, and the type of the signal transmission is PDCCH skipping transmission, SPS transmission, CG transmission, PRACH transmission, or paging transmission, the terminal may suspend transmission under certain conditions, which not only avoids the impact on system transmission performance caused by inconsistent understanding between the terminal and the base station, but also improves signal transmission performance and reduces energy consumption of the base station.

In some embodiments, the termination timing of the signal transmission includes one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

In an embodiment, in case that the termination timing of the terminal signal transmission is later than the termination timing of the DTX activity period of the base station, and the type of the signal transmission is SPS transmission, the termination timing of signal transmission may be the termination timing of the data being transmitted within SPS transmission on a transmission occasion, or the termination timing of the last transmission occasion configured for the activated SPS transmission.

In an embodiment, in case that the termination timing of the terminal signal transmission is later than the termination timing of the DTX activity period of the base station, and the type of the signal transmission is CG transmission, the termination timing of signal transmission may be the termination timing of the data being transmitted within CG transmission on a transmission occasion, or the termination timing of the last transmission occasion configured for the activated CG transmission.

In an embodiment, in case that the termination timing of the terminal signal transmission is later than the termination timing of the DTX activity period of the base station, and the type of the signal transmission is PRACH transmission, the termination timing of signal transmission may be the termination timing of the data being transmitted within RACH transmission on a transmission occasion, or the termination timing of the transmission occasion for the RACH within the inactivity period.

In an embodiment, in case that the termination timing of the terminal signal transmission is later than the termination timing of the DTX activity period of the base station, and the type of the signal transmission is paging transmission, the termination timing of signal transmission may be the termination timing of the data being transmitted within paging transmission on a transmission occasion, or the termination timing of the transmission occasion for the paging transmission within the inactivity period.

In the method for signal transmission provided in embodiments of the present application, in case that the termination timing of the signal transmission of the terminal is later than the termination timing of the DTX activity period of the base station, the terminal may perform different operations in different conditions, which not only avoids the impact on system transmission performance caused by inconsistent understanding between the terminal and the base station, but also improves signal transmission performance and reduces energy consumption of the base station.

Below are several specific examples to further explain the methods in the above embodiments.

### Example I

When the base station is configured with DTX and/or DRX energy-saving technology and the terminal is configured with DRX transmission, in case that the termination timing of the DRX activity period of the terminal is later than the termination timing of the DTX and/or DRX activity period of the base station, the following may be performed.

### Terminal side

Step 1: the terminal obtains configuration information of the DTX and/or DRX of the base station.

The transmission manner of DTX and/or DRX of the base station includes at least one of the following: DTX of the base station, DRX of the base station, the base station transmitting according to a first transmission pattern, or and the base station receiving according to a second transmission pattern.

The configuration information of DTX and/or DRX of the base station includes at least one of the following: an activity period of the base station for transmitting signals or information, an inactivity period of the base station for transmitting signals or information, an activity period of the base station for receiving signals or information, or an inactivity period of the base station for receiving signals or information.

In an embodiment, an activity period of a base station represents that the base station performs the transmission and/or monitoring of signals or information. An inactivity period of a base station represents that the base station does not perform the transmission and/or monitoring of signals or information, and skip the transmission and/or monitoring of signals or information. The transmission of signals or information may include at least one of the following: transmission of reference signals, transmission of synchronization signals, or transmission of data. Furthermore, the transmission of signals or information may include at least one of the following: downlink reference signal, uplink reference signal, downlink physical channel information, uplink physical channel information, downlink data, uplink data, downlink control channel, downlink control information, uplink control channel, or uplink control information.

The DTX and DRX activity period transmission of the base station includes at least one of the following: the start timing and/or termination timing of the DTX activity period transmission of the base station and the DRX activity period transmission of the base station are the same, or the start timing and/or termination timing of the DTX activity period transmission of the base station and the DRX activity period transmission of the base station are different.

Step 2: the terminal obtains DRX configuration information of the terminal.

The transmission manner of DRX of the terminal includes at least one of the following: DRX of the base station, or the base station receiving according to a third transmission pattern.

The DRX configuration information of the terminal includes at least one of the following: an activity period of the terminal for receiving signals or information, or an inactivity period of the terminal for receiving signals or information.

In an embodiment, the DRX activity period of the terminal represents that the terminal performs reception, transmission, and/or monitoring of the signals or information. The DRX inactivity period of the terminal represents that the terminal does not perform reception, transmission, and/or monitoring of the signals or information, and skip the transmission and/or monitoring of signals or information. The transmission of signals or information may include at least one of the following: transmission of reference signals, transmission of synchronization signals, or transmission of data. Furthermore, the transmission of signals or information may include at least one of the following: downlink reference signal, uplink reference signal, downlink physical channel information, uplink physical channel information, downlink data, uplink data, downlink control channel, downlink control information, uplink control channel, or uplink control information.

The DRX activity period transmission of the terminal and the DTX and/or DRX activity period transmission of the base station include at least one of the following: the start timing and/or termination timing of the DTX activity period transmission of the base station and the DRX activity period transmission of the terminal are the same, the start timing and/or termination timing of the DTX activity period transmission of the base station and the DRX activity period transmission of the base station are different, the start timing and/or termination timing of the DRX activity period transmission of the base station and the DRX activity period transmission of the terminal are the same, or the start timing and/or termination timing of the DRX activity period transmission of the base station and the DRX activity period transmission of the base station are different.

Step 3: the terminal performs DTX and/or DRX transmission of the base station according to the configuration.

Step 4: the terminal performs DRX transmission according to the configuration.

When the base station is configured with DTX and/or DRX energy-saving technology and the terminal is configured with DRX transmission, in case that the termination timing of the DRX activity period of the terminal is later than the termination timing of the DTX and/or DRX activity period of the base station, at least one of the following operations may be performed.
1. In case that the reset timing of the DRX activity period of the terminal is not later than the termination timing of the DTX and/or DRX activity period of the base station, the terminal continues to perform the DRX activity period transmission. The base station adjusts the termination timing of the DTX activity period to be not earlier than the first timing. The first timing includes at least one of the following: not earlier than the termination timing of the DRX activity period of the terminal, or later than the termination timing of the DTX activity period of the base station and earlier than the termination timing of the DRX activity period of the terminal.

FIG. 2 is a first exemplary transmission diagram of a DRX activity period of a terminal according to an embodiment of the present application. As shown in FIG. 2, in case that the reset timing of the inactivity timer of the DRX of the terminal is not later than the termination timing of the DTX and/or DRX of the base station, the terminal continues to monitor the PDCCH of the DRX activity period of the terminal.

2. In case that the reset timing of the DRX activity period of the terminal is later than the termination timing of the DTX and/or DRX activity period of the base station, the terminal performs the transmission scheme of the DRX inactivity period of the terminal. The terminal suspends the inactivity timer within the DTX and/or DRX inactivity period of the base station, and/or suspends the DRX activity period transmission within the inactivity timer period. Then, within the DTX and/or DRX activity period of the base station, the terminal continues to perform the DRX activity period transmission of the terminal within the duration of the suspended inactivity timer of the DRX of the terminal. Suspending transmission is equivalent to pausing transmission.

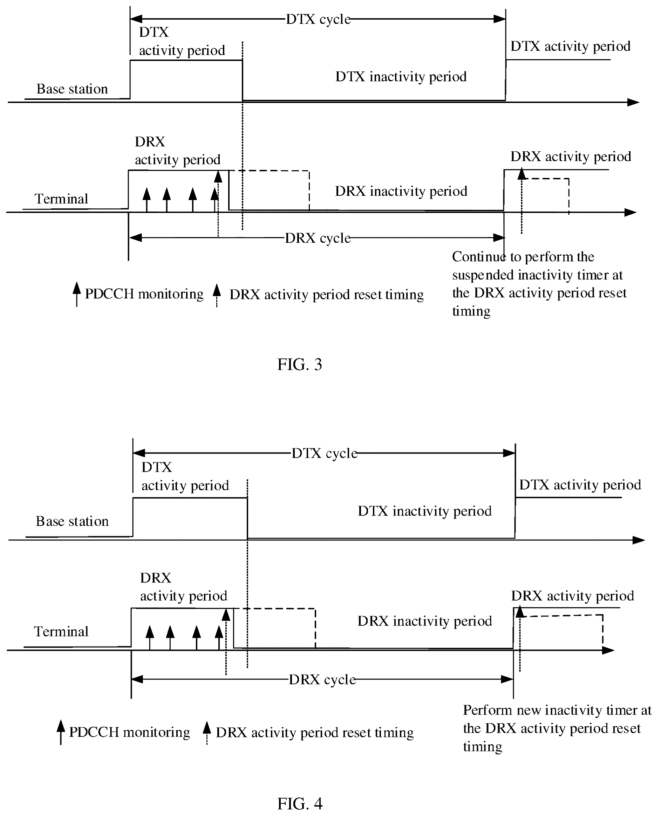

FIG. 3 is a second exemplary transmission diagram of a DRX activity period of a terminal according to an embodiment of the present application. As shown in FIG. 3, in case that the termination timing of the DRX activity period of the terminal is later than the termination timing of the DTX and/or DRX activity period of the base station, the terminal continues to monitor the PDCCH of the DRX activity period of the terminal.

3. In case that the reset timing of the DRX activity period of the terminal is later than the termination timing of the DTX and/or DRX activity period of the base station, the terminal performs the transmission scheme of the DRX inactivity period of the terminal. The terminal interrupts the inactivity timer within the DTX and/or DRX inactivity period of the base station, and/or interrupts the DRX activity period transmission within the inactivity timer period. Then, within the DTX and/or DRX activity period of the base station, the terminal restarts new DRX activity period transmission of the terminal within the inactivity timer of the DRX of the terminal.

FIG. 4 is a third exemplary transmission diagram of a DRX activity period of a terminal according to an embodiment of the present application. As shown in FIG. 4, in case that the termination timing of the DRX activity period of the terminal is later than the termination timing of the DTX and/or DRX activity period of the base station, the terminal continues to monitor the PDCCH of the DRX activity period of the terminal.

### Base station side

Step 1: the base station is configured with DTX and/or DRX.

Step 1 is the same to step 1 on the terminal side.

Step 2: the base station configures the DRX of the terminal.

Step 2 is the same to step 1 on the terminal side.

Step 3: the base station performs DTX and/or DRX transmission of the base station according to the configuration in step 1.

Step 4: the base station performs DRX transmission of the terminal according to the configuration in step 2.

The transmission on the base station side is shown in steps 3 and 4 on the terminal side.

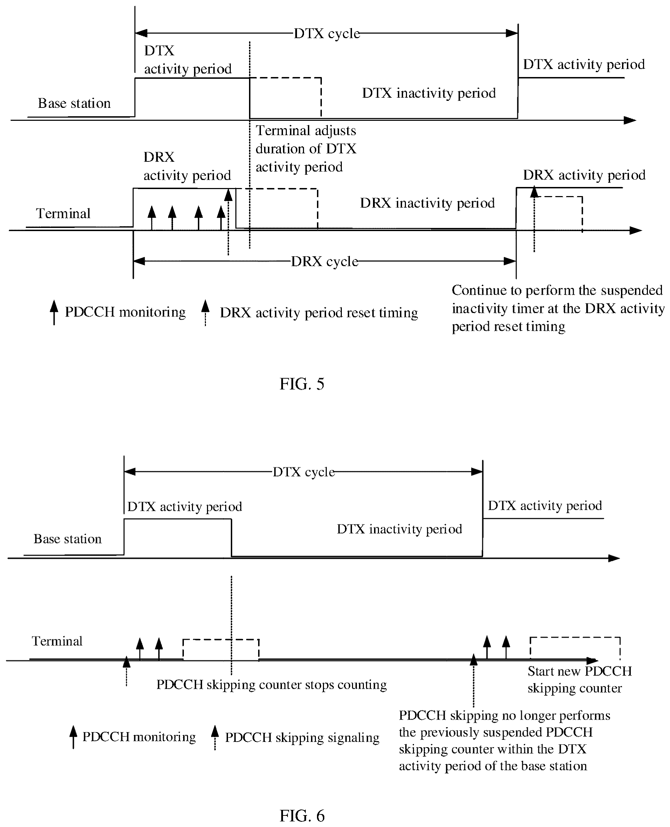

FIG. 5 is a first exemplary transmission diagram of adjusting DTX and/or DRX by a base station according to an embodiment of the present application. As shown in FIG. 5, in case that the reset timing of the DRX activity period of the terminal is not later than the termination timing of the DTX and/or DRX activity period of the base station, the base station adjusts the termination timing of the DTX activity period.

Furthermore, the base station adjusts the DTX and/or DRX activity period and notifies the terminal of the adjustment. The notification manner may include at least one of the following: pre-defined by the base station and terminal, radio resource control (RRC) signaling, higher-level signaling, physical-layer signaling, or dynamic signaling. Dynamic signaling may be downlink control information (DCI) and/or media access control-control element (MAC-CE).

### Example II

When the base station is configured with DTX and/or DRX energy-saving technology and the terminal is configured with PDCCH skipping transmission, in case that the termination timing of the PDCCH skipping transmission of the terminal is later than the termination timing of the DTX and/or DRX activity period of the base station, the following may be performed.

### Terminal side

Step 1: the terminal obtains configuration of the DTX and/or DRX of the base station.

Step 1 is the same to the step 1 on the terminal side in Example I.

Step 2: the terminal obtains the PDCCH skipping transmission configuration of the terminal.

PDCCH skipping transmission of the terminal indicates that the terminal is skipping PDCCH monitoring.

The PDCCH skipping transmission of the terminal may be configured by the base station using RRC signaling and/or dynamic signaling.

The configuration of the PDCCH skipping transmission of the terminal includes at least one of the following: a number of monitored PDCCHs skipped, time of monitored PDCCH skipped, and a timer of monitored PDCCH skipped. Time of monitored PDCCH skipped includes at least one of a number of symbols, a number of slots, a number of sub frames, or a number of wireless frames. The timer of monitored PDCCH skipped includes the operation of adding or subtracting one for each timer of monitored PDCCH skipped.

Step 3: the terminal performs DTX and/or DRX transmission of the base station according to the configuration.

Step 4: the terminal performs PDCCH skipping transmission according to the configuration.

When the base station is configured with DTX and/or DRX energy-saving technology and the terminal is configured with PDCCH skipping transmission, in case that the termination timing of the PDCCH skipping transmission of the terminal is later than the termination timing of the DTX and/or DRX activity period of the base station, at least one of the following operations may be performed.
1. FIG. 6 is a first exemplary transmission diagram of PDCCH skipping transmission of a terminal according to an embodiment of the present application. As shown in FIG. 6, the terminal ends the PDCCH skipping transmission and performs DTX and/or DRX inactivity period transmission of the base station. When the DTX and/or DRX activity period of the base station arrives, the terminal initiates PDCCH skipping transmission according to the instruction.

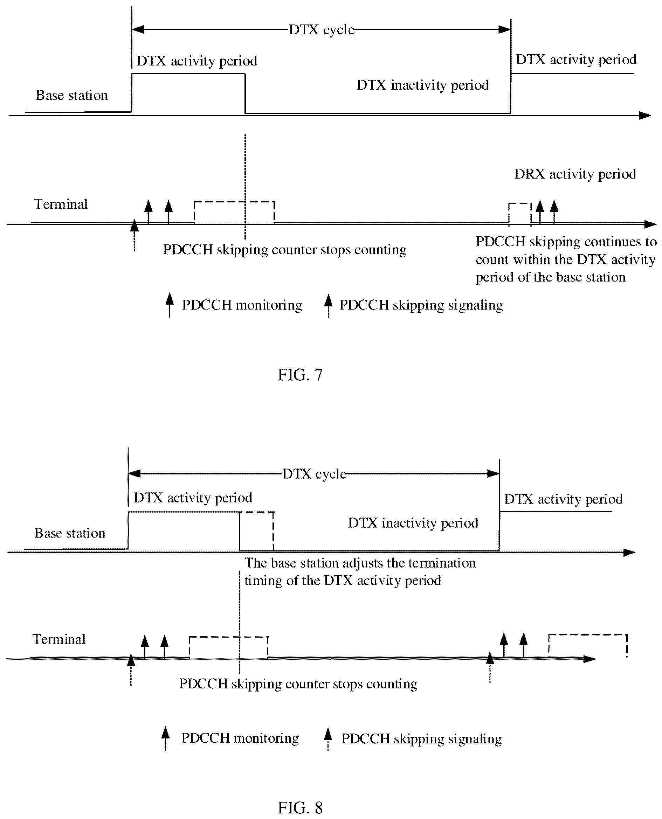

2. FIG. 7 is a second exemplary transmission diagram of PDCCH skipping transmission of a terminal according to an embodiment of the present application. As shown in FIG. 7, the terminal suspends the PDCCH skipping transmission and performs DTX and/or DRX inactivity period transmission of the base station. When the DTX and/or DRX activity period of the base station arrives, the terminal continues to perform the suspended PDCCH skipping transmission.
3. FIG. 8 is a second exemplary transmission diagram of adjusting DTX and/or DRX by a base station according to an embodiment of the present application. As shown in FIG. 8, the terminal continues to perform PDCCH skipping transmission, and the base station adjusts the termination timing of the DTX and/or DRX activity period to be not earlier than the termination timing of the PDCCH skipping transmission of the terminal.

### Base station side

Step 1: the base station is configured with DTX and/or DRX.

Step 1 is the same to step 1 on the terminal side.

Step 2: the base station configures the PDCCH skipping transmission of the terminal.

Step 2 is the same to step 1 on the terminal side.

Step 3: the base station performs DTX and/or DRX transmission of the base station according to the configuration in step 1.

Step 4: the base station performs the PDCCH skipping transmission of the terminal according to the configuration in step 2.

In an embodiment, the transmission on the base station side is same as in Example I, which only differs in steps 3 and 4 as shown above on the terminal side.

### Example III

When the base station is configured with DTX and/or DRX energy-saving technology, and the terminal is configured with SPS transmission and/or CG transmission, in case that the termination timing of the activated SPS transmission and/or CG transmission is later than the termination timing of the DTX and/or DRX activity period of the base station, the following may be performed.

### Terminal side

Step 1: the terminal obtains configuration of the DTX and/or DRX of the base station.

Step 1 is the same to the step 1 on the terminal side in Example I.

Step 2: the terminal obtains the configuration for semi-persistent transmission of the terminal.

Semi-persistent transmission of the terminal includes least one of downlink semi-persistent transmission and semi-persistent transmission. The downlink semi-persistent transmission includes SPS transmission. The uplink semi-persistent transmission includes CG transmission.

Transmission information of semi-persistent transmission may be transmission information configured by the base station, including at least one of scheduling information, a transmission timing, or a transmission period.

Step 3: the terminal performs DTX and/or DRX transmission of the base station according to the configuration.

Step 4: the terminal performs semi-persistent transmission according to the configuration.

When the base station is configured with DTX and/or DRX energy-saving technology, and both SPS transmission and/or CG transmission are configured, there are two scenarios.

Scenario 1: the start timing of SPS or CG transmission occasion is not later than the termination timing of the DTX and/or DRX activity period of the base station, and the termination timing of SPS or CG transmission occasion is later than the termination timing of the DTX and/or DRX activity period of the base station.

Scenario 2: the start timing of SPS or CG transmission occasion is later than the termination timing of the DTX and/or DRX activity period of the base station, and the termination timing of SPS or CG transmission occasion is later than the termination timing of the DTX and/or DRX activity period of the base station.

For scenario 1, at least one of the following operations may be performed.
1. The terminal continues to perform SPS transmission according to the configured SPS transmission. The base station adjusts the termination timing of the DTX and/or DRX activity period to be not earlier than the activation transmission timing of the activated SPS transmission.
2. The terminal performs SPS transmission according to the configured DTX and/or DRX configuration of the base station, and suspends the activated SPS transmission within the DTX and/or DRX activity period of the base station. Then, within the DTX and/or DRX activity period of the base station, the suspended SPS transmission continues.
3. The terminal performs SPS transmission according to the configured DTX and/or DRX configuration of the base station. Within the DTX and/or DRX inactivity period of the base station, the activated SPS transmission is interrupted, the SPS transmission to be activated is deactivated. The new activated SPS transmission is restarted within DTX and/or DRX activity period of the base station.

### Base station side

Step 1: the base station is configured with DTX and/or DRX.

Step 1 is the same to step 1 on the terminal side.

Step 2: the base station configures the semi-persistent transmission of the terminal.

Step 2 is the same to step 1 on the terminal side.

Step 3: the base station performs DTX and/or DRX transmission of the base station according to the configuration in step 1.

Step 4: the base station performs semi-persistent transmission of the terminal according to the configuration in step 2.

The transmission on the base station side is reflected in steps 3 and 4 on the terminal side, and will not be repeated here.

### Example IV

When the base station is configured with DTX and/or DRX energy-saving technology and performs random access channel (RACH) transmission, in case that the termination timing of the RACH transmission occasion is later than the termination timing of the DTX and/or DRX activity period of the base station, the following may be performed.

Step 1: the terminal obtains configuration of the DTX and/or DRX of the base station.

Step 1 is the same to the step 1 on the terminal side in Example I.

Step 2: the terminal obtains the configuration for RACH transmission occasion of the terminal.

The configuration for RACH transmission occasion includes the configuration for RACH transmission of time, frequency, and spatial resources.

The configuration for configured RACH transmission occasion of the terminal includes initiating RACH and performing RACH procedures.

Step 3: the terminal performs DTX and/or DRX transmission of the base station according to the configuration.

Step 4: the terminal performs RACH transmission according to the configuration.

When the base station is configured with DTX and/or DRX energy-saving technology and performs RACH transmission, there are two scenarios.

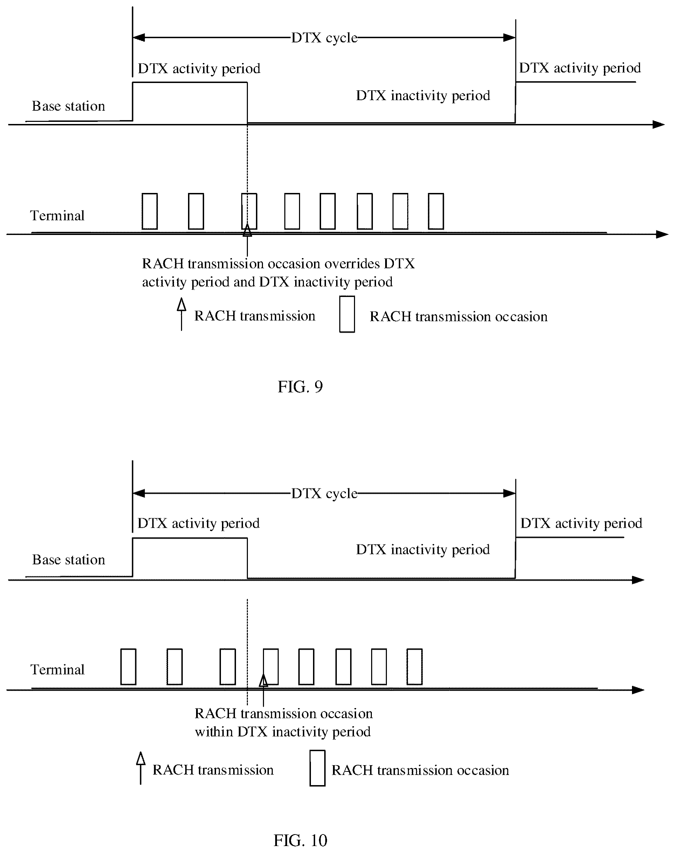

FIG. 9 is an exemplary diagram of RACH transmission scenario 1 according to an embodiment of the present application. As shown in FIG. 9, scenario 1 is that the start timing of RACH transmission occasion is not later than the termination timing of the DTX and/or DRX activity period of the base station, and the termination timing of RACH transmission occasion is later than the termination timing of the DTX and/or DRX activity period of the base station.

FIG. 10 is an exemplary diagram of RACH transmission scenario 2 according to an embodiment of the present application. As shown in FIG. 10, scenario 2 is that the start timing of RACH transmission occasion is later than the termination timing of the DTX and/or DRX activity period of the base station, and the termination timing of RACH transmission occasion is later than the termination timing of the DTX and/or DRX activity period of the base station.

Regarding scenario 1, when the base station is configured with DTX and/or DRX energy-saving technology and performs RACH transmission, in case that the termination timing of the RACH transmission occasion is later than the termination timing of the DTX and/or DRX activity period of the base station, at least one of the following operations may be performed.
1. The terminal continues to perform RACH transmission according to the configured RACH transmission occasion. The base station adjusts the termination timing of the DTX and/or DRX activity period to be not earlier than the termination timing of the RACH transmission occasion.
2. The terminal performs terminal RACH transmission according to the configured DTX and/or DRX configuration of the base station, and suspends RACH transmission within the DTX and/or DRX inactivity period of the base station. The suspended RACH transmission continues within DTX and/or DRX activity period of the base station.
3. The terminal performs RACH transmission according to the configured DTX and/or DRX configuration of the base station, and interrupts RACH transmission within the DTX and/or DRX inactivity period of the base station. The new RACH transmission is restarted within DTX and/or DRX activity period of the base station.

Regarding scenario 2, when the base station is configured with DTX and/or DRX energy-saving technology and performs RACH transmission, in case that the termination timing of the RACH transmission occasion is later than the termination timing of the DTX and/or DRX activity period of the base station, at least one of the following operations may be performed.
1. The terminal continues to perform RACH transmission according to the configured RACH transmission occasion. The base station adjusts the termination timing of the DTX and/or DRX activity period to be not earlier than the termination timing of the RACH transmission occasion.
2. The terminal performs RACH transmission according to the configured DTX and/or DRX configuration of the base station, and interrupts RACH transmission within the DTX and/or DRX inactivity period of the base station. The new RACH transmission is restarted within DTX and/or DRX activity period of the base station.

### Base station side

Step 1: the base station is configured with DTX and/or DRX.

Step 1 is the same to step 1 on the terminal side.

Step 2: the base station configures the RACH transmission of the terminal.

Step 2 is the same to step 1 on the terminal side.

Step 3: the base station performs DTX and/or DRX transmission of the base station according to the configuration in step 1.

Step 4: the base station performs RACH transmission of the terminal according to the configuration in step 2.

The transmission on the base station side is reflected in steps 3 and 4 on the terminal side, and will not be repeated here.

### Example V

When the base station is configured with DTX and/or DRX energy-saving technology and performs paging transmission, in case that the termination timing of the paging transmission occasion is later than the termination timing of the DTX and/or DRX activity period of the base station, the following may be performed.

### Terminal side

Step 1: the terminal obtains configuration of the DTX and/or DRX of the base station.

Step 1 is the same to the step 1 on the terminal side in Example I.

Step 2: the terminal obtains the configuration for paging transmission occasion of the terminal.

The configuration for paging transmission occasion includes the configuration for paging transmission of time, frequency, and spatial resources.

The configuration for configured paging transmission occasion of the terminal includes initiating paging and performing paging procedures.

Step 3: the terminal performs DTX and/or DRX transmission of the base station according to the configuration.

Step 4: the terminal performs paging transmission according to the configuration.

When the base station is configured with DTX and/or DRX energy-saving technology and performs paging transmission, there are two scenarios.

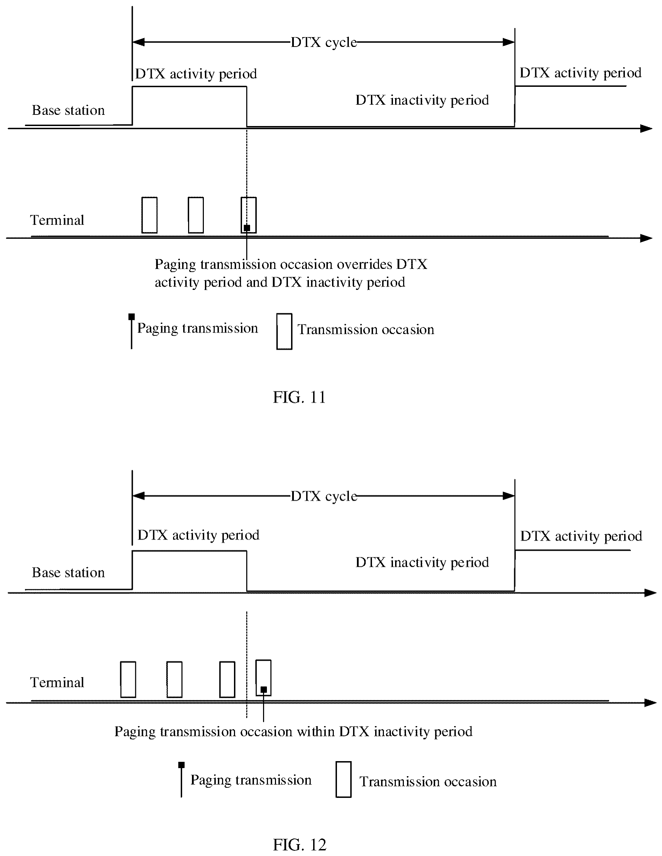

FIG. 11 is an exemplary diagram of paging transmission scenario 1 according to an embodiment of the present application. As shown in FIG. 11, the starting time of a first paging transmission occasion is not later than the termination timing of the DTX and/or DRX activity period of the base station, and the termination timing of the paging transmission occasion is later than the termination timing of the DTX and/or DRX activity period of the base station. The first paging transmission occasion is a transmission occasion of first UE.

FIG. 12 is an exemplary diagram of paging transmission scenario 2 according to an embodiment of the present application. As shown in FIG. 12, the starting time of a second paging transmission occasion is not later than the termination timing of the DTX and/or DRX activity period of the base station, and the termination timing of the paging transmission occasion is later than the termination timing of the DTX and/or DRX activity period of the base station. The second paging transmission occasion includes a paging transmission occasion of a terminal group. The terminal group includes at least one terminal.

When the base station is configured with DTX and/or DRX energy-saving technology and performs paging transmission, in case that the termination timing of the paging transmission occasion is later than the termination timing of the DTX and/or DRX activity period of the base station, at least one of the following operations may be performed.
1. The terminal continues to perform paging transmission according to the configured paging transmission occasion. The base station adjusts the termination timing of the DTX and/or DRX activity period to be not earlier than the termination timing of the paging transmission occasion.
2. The terminal performs terminal paging transmission according to the configured DTX and/or DRX configuration of the base station, and suspends paging transmission within the DTX and/or DRX inactivity period of the base station. The suspended paging transmission continues within DTX and/or DRX activity period of the base station.
3. The terminal performs paging transmission according to the configured DTX and/or DRX configuration of the base station, and interrupts paging transmission within the DTX and/or DRX inactivity period of the base station. A new paging transmission is restarted within the DTX and/or DRX activity period of the base station.

### Base station side

Step 1: the base station is configured with DTX and/or DRX.

Step 1 is the same to step 1 on the terminal side.

Step 2: the base station configures the paging transmission of the terminal.

Step 2 is the same to step 1 on the terminal side.

Step 3: the base station performs DTX and/or DRX transmission of the base station according to the configuration in step 1.

Step 4: the base station performs paging transmission of the terminal according to the configuration in step 2.

The transmission on the base station side is reflected in steps 3 and 4 on the terminal side, and will not be repeated here.

In the method for signal transmission provided in embodiments of the present application, in case that the termination timing of the signal transmission of the terminal is later than the termination timing of the DTX activity period of the base station, the terminal may perform different operations in different conditions, which not only avoids the impact on system transmission performance caused by inconsistent understanding between the terminal and the base station, but also improves signal transmission performance and reduces energy consumption of the base station.

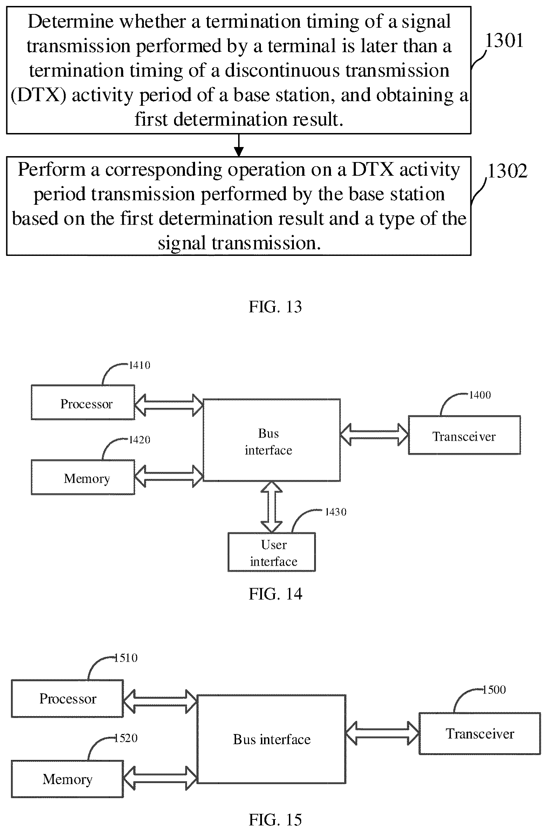

FIG. 13 is a second schematic flowchart of a method for signal transmission according to an embodiment of the present application. As shown in FIG. 13, embodiments of the present application provide a method for signal transmission, which may be performed by a base station. The method includes the following steps.
step 1301: determining whether a termination timing of a signal transmission performed by a terminal is later than a termination timing of a discontinuous transmission (DTX) activity period of a base station, and obtaining a first determination result; and
step 1302: performing a corresponding operation on a DTX activity period transmission performed by the base station based on the first determination result and a type of the signal transmission.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DTX activity period transmission performed by the base station based on the second determination result.

In some embodiments, performing the corresponding operation on the DTX activity period transmission performed by the base station based on the second determination result includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, adjusting the termination timing of the DTX activity period to be no earlier than a first timing; and
in case that the second determination result is that the reset timing of the inactivity timer of the DRX performed by the terminal is later than the termination timing of the DTX activity period of the base station, continuing to perform a DTX inactivity period transmission of the base station.

In some embodiments, the first timing satisfies one or more of the following conditions:
not earlier than a termination timing of a DRX activity period performed by the terminal; or
later than the termination timing of the DTX activity period of the base station and earlier than a termination timing of a DRX activity period performed by the terminal.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is one or more of the following types, performing the corresponding operation on the DTX activity period transmission performed by the base station:
physical downlink control channel (PDCCH) skipping transmission;
semi-persistent scheduling (SPS) transmission;
configured grant (CG) transmission;
physical random access channel (PRACH) transmission; or
paging transmission.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, continuing to perform a DTX inactivity period transmission of the base station.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is PDCCH skipping transmission, notifying the terminal that the termination timing of the DTX activity period of the base station is not earlier than a termination timing of the PDCCH skipping transmission of the terminal.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is not PDCCH skipping transmission, adjusting the termination timing of the DTX activity period of the base station to be no earlier than a termination timing of a corresponding signal transmission.

In some embodiments, the termination timing of the signal transmission includes one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

In an embodiment, the method for signal transmission provided in embodiments of the present application may refer to the method for signal transmission embodiment with the terminal as the performing subject, and may achieve the same technical effect. Therefore, the same parts and beneficial effects as the corresponding method embodiments in this embodiment are not repeated here.

FIG. 14 is a schematic structural diagram of a terminal according to an embodiment of the present application. As shown in FIG. 14, the terminal includes a memory 1420, a transceiver 1400, and a processor 1410, where
the memory 1420 is used for storing a computer program, the transceiver 1400 is used for receiving and transmitting data under control of the processor, and the processor 1410 is used for reading the computer program in the memory and performing the following operations:
determining whether a termination timing of a signal transmission performed by a terminal is later than a termination timing of a discontinuous transmission (DTX) activity period of a base station, and obtaining a first determination result; and
performing a corresponding operation on the signal transmission based on the first determination result and a type of the signal transmission.

In an embodiment, the transceiver 1400 is used for receiving and transmitting data under control of the processor 1410.

In FIG. 14, a bus architecture may include any number of interconnected buses and bridges, which are linked together through various circuits of one or more processors represented by the processor 1410 and one or more memories represented by the memory 1420. The bus architecture may also link together various other circuits, such as peripherals, voltage regulators, and power management circuits, which are well known in the art, and therefore will not be further described in the present application. The bus interface provides an interface. The transceiver 1400 may include multiple elements, i.e., a transmitter and a receiver, units for providing communication with various other devices over transmission media including wireless channels, wired channels, fiber optic cables, and the like. For different user equipment, a user interface 1430 may be an interface capable of externally or internally connecting the required device, and the connected device includes, but not limited to, a keypad, a display, a speaker, a microphone, a joystick, and the like.

The processor 1410 is responsible for managing the bus architecture and general processing, and the memory 1420 may store data used by the processor 1410 when performing operations.

In some embodiments, processor 1410 may be a central processing unit (CPU), an application specific integrated circuit (ASIC), a field-programmable gate array (FPGA), or a complex programmable logic device (CPLD). The processor may also use a multi-core architecture.

The processor is configured to perform any of the methods of the embodiments of the present application based on an obtained executable instruction by calling the computer program stored in the memory. The processor and memory may also be physically separated.

In some embodiments, performing the corresponding operation on the signal transmission based on the first determination result and the type of the signal transmission includes:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DRX activity period transmission performed by the terminal based on the second determination result.

In some embodiments, performing the corresponding operation on the DRX activity period transmission performed by the terminal based on the second determination result includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, continuing to perform the DRX activity period transmission; and/or,
in case that the second determination result is that the reset timing of the inactivity timer of the DRX performed by the terminal is later than the termination timing of the DTX activity period of the base station, interrupting or suspending the DRX activity period transmission.

In some embodiments, suspending the DRX activity period transmission includes:
suspending the inactivity timer within a DTX inactivity period of the base station; and/or,
suspending a DRX activity period transmission within a timing duration of the inactivity timer within a DTX inactivity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is later than the termination timing of the DTX activity period of the base station, continuing to perform a DRX activity period transmission suspended within a timing duration of the inactivity timer within the DTX activity period of the base station.

In some embodiments, interrupting the DRX activity period transmission includes:
interrupting the inactivity timer within a DTX inactivity period of the base station; and/or,
interrupting a DRX activity period transmission within a timing duration of the inactivity timer within a DTX inactivity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is later than the termination timing of the DTX activity period of the base station, restarting a new DRX activity period transmission within a timing duration of the inactivity timer within the DTX activity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, performing one or more of the following operations:
terminating the inactivity timer within a DTX inactivity period of the base station;
not performing uplink data transmission within a DTX inactivity period of the base station;
not performing downlink data transmission within a DTX inactivity period of the base station;
suspending the inactivity timer within a DTX inactivity period of the base station; or
suspending a DRX activity period transmission within a timing duration of the inactivity timer within a DTX inactivity period of the base station.

In some embodiments, performing the corresponding operation on the signal transmission based on the first determination result and the type of the signal transmission includes:
in case that the first determination result is that the termination timing of the signal transmission is later than the termination timing of the DTX activity period of the base station, and the type of the signal transmission is one or more of the following types, continuing to perform, interrupt or suspend the signal transmission:
physical downlink control channel (PDCCH) skipping transmission;
semi-persistent scheduling (SPS) transmission;
configured grant (CG) transmission;
physical random access channel (PRACH) transmission; or
paging transmission.

In some embodiments, performing the corresponding operation on the signal transmission based on the first determination result and the type of the signal transmission further includes:
in case that the first determination result is that the termination timing of the signal transmission is later than the termination timing of the DTX activity period of the base station, and the type of the signal transmission is PDCCH skipping transmission, determining that the termination timing of the DTX activity period of the base station is not earlier than the termination timing of the signal transmission.

In some embodiments, interrupting the signal transmission includes:
interrupting the signal transmission within a DTX inactivity period of the base station; and/or,
interrupting the signal transmission within the DTX activity period of the base station.

In some embodiments, after interrupting the signal transmission, the method further includes:
restarting a new signal transmission within the DTX activity period of the base station.

In some embodiments, suspending the signal transmission includes:
suspending the signal transmission within a DRX inactivity period of the base station.

In some embodiments, after suspending the signal transmission, the method further includes:
continuing to perform the suspended signal transmission within the DTX activity period of the base station.

In some embodiments, the termination timing of the signal transmission includes one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

It should be noted that the terminal provided in embodiments of the present application may implement all the method steps implemented by the method embodiment with the terminal as the performing subject, and may achieve the same technical effects. Therefore, the same parts and beneficial effects as the method embodiment in this embodiment are not repeated here.

FIG. 15 is a schematic structural diagram of a base station according to an embodiment of the present application. As shown in FIG. 15, the base station includes a memory 1520, a transceiver 1500, and a processor 1510, where
the memory 1520 is used for storing a computer program, the transceiver 1500 is used for receiving and transmitting data under control of the processor, and the processor 1510 is used for reading the computer program in the memory and performing the following operations:
determining whether a termination timing of a signal transmission performed by a terminal is later than a termination timing of a discontinuous transmission (DTX) activity period of a base station, and obtaining a first determination result; and
performing a corresponding operation on a DTX activity period transmission performed by the base station based on the first determination result and a type of the signal transmission.

In an embodiment, the transceiver 1500 is used for receiving and transmitting data under control of the processor 1510.

In FIG. 15, a bus architecture may include any number of interconnected buses and bridges, which are linked together through various circuits of one or more processors represented by the processor 1510 and one or more memories represented by the memory 1520. The bus architecture may also link together various other circuits, such as peripherals, voltage regulators, and power management circuits, which are well known in the art, and therefore will not be further described in the present application. The bus interface provides an interface. The transceiver 1500 may include multiple elements, i.e., a transmitter and a receiver, units for providing communication with various other devices over transmission media including wireless channels, wired channels, fiber optic cables, and the like. The processor 1510 is responsible for managing the bus architecture and general processing, and the memory 1520 may store data used by the processor 1510 when performing operations.

The processor 1510 may be a central processing unit (CPU), an application specific integrated circuit (ASIC), a field-programmable gate array (FPGA), or a complex programmable logic device (CPLD). The processor may also use a multi-core architecture.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DTX activity period transmission performed by the base station based on the second determination result.

In some embodiments, performing the corresponding operation on the DTX activity period transmission performed by the base station based on the second determination result includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, adjusting the termination timing of the DTX activity period to be no earlier than a first timing; and
in case that the second determination result is that the reset timing of the inactivity timer of the DRX performed by the terminal is later than the termination timing of the DTX activity period of the base station, continuing to perform a DTX inactivity period transmission of the base station.

In some embodiments, the first timing satisfies one or more of the following conditions:
not earlier than a termination timing of a DRX activity period performed by the terminal; or
later than the termination timing of the DTX activity period of the base station and earlier than a termination timing of a DRX activity period performed by the terminal.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is one or more of the following types, performing the corresponding operation on the DTX activity period transmission performed by the base station:
physical downlink control channel (PDCCH) skipping transmission;
semi-persistent scheduling (SPS) transmission;
configured grant (CG) transmission;
physical random access channel (PRACH) transmission; or
paging transmission.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, continuing to perform a DTX inactivity period transmission of the base station.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is PDCCH skipping transmission, notifying the terminal that the termination timing of the DTX activity period of the base station is not earlier than a termination timing of the PDCCH skipping transmission of the terminal.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is not PDCCH skipping transmission, adjusting the termination timing of the DTX activity period of the base station to be no earlier than a termination timing of a corresponding signal transmission.

In some embodiments, the termination timing of the signal transmission includes one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

In an embodiment, the above-mentioned base station provided in embodiments of the present application may achieve all the method steps implemented by the method embodiment with the base station as the performing subject, and may achieve the same technical effects. Therefore, the same parts and beneficial effects as the method embodiment in this embodiment are not repeated here.

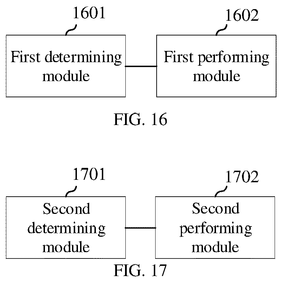

FIG. 16 is a first schematic structural diagram of an apparatus for signal transmission according to an embodiment of the present application. As shown in FIG. 16, the apparatus for signal transmission provided in embodiments of the present application includes a first determining module 1601 and a first performing module 1602, where
the first determining module 1601 is used for determining whether a termination timing of a signal transmission performed by a terminal is later than a termination timing of a discontinuous transmission (DTX) activity period of a base station, and obtaining a first determination result; and
the first performing module 1602 is used for performing a corresponding operation on the signal transmission based on the first determination result and a type of the signal transmission.

In some embodiments, performing the corresponding operation on the signal transmission based on the first determination result and the type of the signal transmission includes:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DRX activity period transmission performed by the terminal based on the second determination result.

In some embodiments, performing the corresponding operation on the DRX activity period transmission performed by the terminal based on the second determination result includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, continuing to perform the DRX activity period transmission; and/or,
in case that the second determination result is that the reset timing of the inactivity timer of the DRX performed by the terminal is later than the termination timing of the DTX activity period of the base station, interrupting or suspending the DRX activity period transmission.

In some embodiments, suspending the DRX activity period transmission includes:
suspending the inactivity timer within a DTX inactivity period of the base station; and/or,
suspending a DRX activity period transmission within a timing duration of the inactivity timer within a DTX inactivity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is later than the termination timing of the DTX activity period of the base station, continuing to perform a DRX activity period transmission suspended within a timing duration of the inactivity timer within the DTX activity period of the base station.

In some embodiments, interrupting the DRX activity period transmission includes:
interrupting the inactivity timer within a DTX inactivity period of the base station; and/or,
interrupting a DRX activity period transmission within a timing duration of the inactivity timer within a DTX inactivity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is later than the termination timing of the DTX activity period of the base station, restarting a new DRX activity period transmission within a timing duration of the inactivity timer within the DTX activity period of the base station.

In some embodiments, performing the corresponding operation on the DRX activity period transmission performed by the terminal based on the second determination result further includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, performing one or more of the following operations:
terminating the inactivity timer within a DTX inactivity period of the base station;
not performing uplink data transmission within a DTX inactivity period of the base station;
not performing downlink data transmission within a DTX inactivity period of the base station;
suspending the inactivity timer within a DTX inactivity period of the base station; or
suspending a DRX activity period transmission within a timing duration of the inactivity timer within a DTX inactivity period of the base station.

In some embodiments, performing the corresponding operation on the signal transmission based on the first determination result and the type of the signal transmission includes:
in case that the first determination result is that the termination timing of the signal transmission is later than the termination timing of the DTX activity period of the base station, and the type of the signal transmission is one or more of the following types, continuing to perform, interrupt or suspend the signal transmission:
physical downlink control channel (PDCCH) skipping transmission;
semi-persistent scheduling (SPS) transmission;
configured grant (CG) transmission;
physical random access channel (PRACH) transmission; or
paging transmission.

In some embodiments, performing the corresponding operation on the signal transmission based on the first determination result and the type of the signal transmission further includes:
in case that the first determination result is that the termination timing of the signal transmission is later than the termination timing of the DTX activity period of the base station, and the type of the signal transmission is PDCCH skipping transmission, determining that the termination timing of the DTX activity period of the base station is not earlier than the termination timing of the signal transmission.

In some embodiments, interrupting the signal transmission includes:
interrupting the signal transmission within a DTX inactivity period of the base station; and/or,
interrupting the signal transmission within the DTX activity period of the base station.

In some embodiments, after interrupting the signal transmission, the method further includes:
restarting a new signal transmission within the DTX activity period of the base station.

In some embodiments, suspending the signal transmission includes:
suspending the signal transmission within a DRX inactivity period of the base station.

In some embodiments, after suspending the signal transmission, the method further includes:
continuing to perform the suspended signal transmission within the DTX activity period of the base station.

In some embodiments, the termination timing of the signal transmission includes one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

In an embodiment, the apparatus for signal transmission provided in embodiments of the present application may achieve all method steps implemented by the method embodiment with the terminal as the performing subject, and may achieve the same technical effect. Therefore, the same parts and beneficial effects as the method embodiment in this embodiment are not repeated here.

FIG. 17 is a second schematic structural diagram of an apparatus for signal transmission according to an embodiment of the present application. As shown in FIG. 17, embodiments of the present application provide an apparatus for signal transmission, including a second determining module 1701 and a second performing module 1702, where
the second determining module 1701 is used for determining whether a termination timing of a signal transmission performed by a terminal is later than a termination timing of a discontinuous transmission (DTX) activity period of a base station, and obtaining a first determination result; and
the second performing module 1702 is used for performing a corresponding operation on a DTX activity period transmission performed by the base station based on the first determination result and a type of the signal transmission.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DTX activity period transmission performed by the base station based on the second determination result.

In some embodiments, performing the corresponding operation on the DTX activity period transmission performed by the base station based on the second determination result includes:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, adjusting the termination timing of the DTX activity period to be no earlier than a first timing; and
in case that the second determination result is that the reset timing of the inactivity timer of the DRX performed by the terminal is later than the termination timing of the DTX activity period of the base station, continuing to perform a DTX inactivity period transmission of the base station.

In some embodiments, the first timing satisfies one or more of the following conditions:
not earlier than a termination timing of a DRX activity period performed by the terminal; or
later than the termination timing of the DTX activity period of the base station and earlier than a termination timing of a DRX activity period performed by the terminal.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is one or more of the following types, performing the corresponding operation on the DTX activity period transmission performed by the base station:
physical downlink control channel (PDCCH) skipping transmission;
semi-persistent scheduling (SPS) transmission;
configured grant (CG) transmission;
physical random access channel (PRACH) transmission; or
paging transmission.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, continuing to perform a DTX inactivity period transmission of the base station.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is PDCCH skipping transmission, notifying the terminal that the termination timing of the DTX activity period of the base station is not earlier than a termination timing of the PDCCH skipping transmission of the terminal.

In some embodiments, performing the corresponding operation on the DTX activity period transmission performed by the base station based on the first determination result and the type of the signal transmission includes:
in case that the first determination result is that the termination timing of the signal transmission is later than the termination timing of the DTX activity period of the base station, and the type of the signal transmission is not PDCCH skipping transmission, adjusting the termination timing of the DTX activity period of the base station to be no earlier than a termination timing of a corresponding signal transmission.

In some embodiments, the termination timing of the signal transmission includes one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

In an embodiment, the apparatus for signal transmission provided in embodiments of the present application may achieve all the method steps implemented by the method embodiment with the base station as the performing subject, and may achieve the same technical effect. Therefore, the same parts and beneficial effects as the method embodiment in this embodiment are not repeated here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

In some embodiments, a computer-readable storage medium is further provided, where the computer-readable storage medium stores a computer program for causing a computer to perform the methods for signal transmission provided by the above method embodiments.

In an embodiment, the computer-readable storage medium provided in the embodiments of the present application may implement all the method steps implemented in the above method embodiments and achieve the same technical effects. Therefore, the same parts and beneficial effects as the method embodiments in this embodiment are not described here.

It should be noted that the computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

Additionally, it should be noted that the terms "first", "second", etc. in the embodiments of the present application are used to distinguish similar objects and are not used to describe a specific order or sequence. It should be understood that the terms used in this way may be interchanged in appropriate circumstances, so that the embodiments of the present application may be implemented in order other than those illustrated or described herein, and the objects distinguished by "first" and "second" are usually of the same class, without limiting the number of objects, for example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The phrase "determining B based on A" in the present application means that the factor A should be considered when determining B. Not limited to "determining B based solely on A", it should also include "determining B based on A and C", "determining B based on A, C, and E", "determining C based on A, and further determine B based on C" etc. In addition, it may also include using A as a condition for determining B, for example, "when A satisfies a first condition, using a first method to determine B"; for another example, "in case that A satisfies a second condition, determining B" and so on; for yet another example, "in case that A satisfies a third condition, determining B based on a first parameter" and so on. A may also be used as a condition for determining B, such as "in case that A satisfies the first condition, using the first method to determine C, and further determining B based on C", etc.

The solutions provided by the embodiments of the present application may be applicable to various systems, especially a 5G system. For example, applicable systems may be a global system of mobile communication (GSM) system, a code division multiple access (CDMA) system, a wideband code division multiple access (WCDMA), general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CNs) via a radio access network (RAN), and the wireless terminal device may be a mobile terminal, such as a mobile phone (or referred to as a cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission, etc.

Those skilled in the art should understand that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer usable storage media (including but not limited to disk storage and optical storage) containing computer usable program code.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for signal transmission, performed by a terminal, comprising:
determining whether a termination timing of a signal transmission performed by a terminal is later than a termination timing of a discontinuous transmission (DTX) activity period of a base station, and obtaining a first determination result; and
performing a corresponding operation on the signal transmission based on the first determination result and a type of the signal transmission.

2. The method of claim 1, wherein performing the corresponding operation on the signal transmission based on the first determination result and the type of the signal transmission comprises:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DRX activity period transmission performed by the terminal based on the second determination result.

3. The method of claim 2, wherein performing the corresponding operation on the DRX activity period transmission performed by the terminal based on the second determination result comprises:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, continuing to perform the DRX activity period transmission; and/or,
in case that the second determination result is that the reset timing of the inactivity timer of the DRX performed by the terminal is later than the termination timing of the DTX activity period of the base station, interrupting or suspending the DRX activity period transmission.

4. The method of claim 3, wherein suspending the DRX activity period transmission comprises:
suspending the inactivity timer within a DTX inactivity period of the base station; and/or,
suspending a DRX activity period transmission within a timing duration of the inactivity timer within a DTX inactivity period of the base station.

5. The method of claim 3, wherein performing the corresponding operation on the DRX activity period transmission performed by the terminal based on the second determination result further comprises:
in case that the second determination result is that the reset timing of the inactivity timer of the DRX performed by the terminal is later than the termination timing of the DTX activity period of the base station, continuing to perform a DRX activity period transmission suspended within a timing duration of the inactivity timer within the DTX activity period of the base station.

6. The method of claim 3, wherein interrupting the DRX activity period transmission comprises:
interrupting the inactivity timer within a DTX inactivity period of the base station; and/or,
interrupting a DRX activity period transmission within a timing duration of the inactivity timer within a DTX inactivity period of the base station.

7. The method of claim 3, wherein performing the corresponding operation on the DRX activity period transmission performed by the terminal based on the second determination result further comprises:
in case that the second determination result is that the reset timing of the inactivity timer of the DRX performed by the terminal is later than the termination timing of the DTX activity period of the base station, restarting a new DRX activity period transmission within a timing duration of the inactivity timer within the DTX activity period of the base station.

8. The method of claim 3, wherein performing the corresponding operation on the DRX activity period transmission performed by the terminal based on the second determination result further comprises:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, performing one or more of the following operations:
terminating the inactivity timer within a DTX inactivity period of the base station;
not performing uplink data transmission within a DTX inactivity period of the base station;
not performing downlink data transmission within a DTX inactivity period of the base station;
suspending the inactivity timer within a DTX inactivity period of the base station; or
suspending a DRX activity period transmission within a timing duration of the inactivity timer within a DTX inactivity period of the base station.

9. The method of claim 1, wherein performing the corresponding operation on the signal transmission based on the first determination result and the type of the signal transmission comprises:
in case that the first determination result is that the termination timing of the signal transmission is later than the termination timing of the DTX activity period of the base station, and the type of the signal transmission is one or more of the following types, continuing to perform, interrupt or suspend the signal transmission:
physical downlink control channel (PDCCH) skipping transmission;
semi-persistent scheduling (SPS) transmission;
configured grant (CG) transmission;
physical random access channel (PRACH) transmission; or
paging transmission.

10. The method of claim 9, wherein performing the corresponding operation on the signal transmission based on the first determination result and the type of the signal transmission further comprises:
in case that the first determination result is that the termination timing of the signal transmission is later than the termination timing of the DTX activity period of the base station, and the type of the signal transmission is PDCCH skipping transmission, determining that the termination timing of the DTX activity period of the base station is not earlier than the termination timing of the signal transmission.

11. The method of claim 9, wherein interrupting the signal transmission comprises:
interrupting the signal transmission within a DTX inactivity period of the base station; and/or,
interrupting the signal transmission within the DTX activity period of the base station.

12. The method of claim 9, wherein after interrupting the signal transmission, the method further comprises:
restarting a new signal transmission within the DTX activity period of the base station.

13. The method of claim 9, wherein suspending the signal transmission comprises:
suspending the signal transmission within a DRX inactivity period of the base station.

14. The method of claim 9, wherein after suspending the signal transmission, the method further comprises:
continuing to perform the suspended signal transmission within the DTX activity period of the base station.

15. The method of claim 9, wherein the termination timing of the signal transmission comprises one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

16. A method for signal transmission, performed by a base station, comprising:
determining whether a termination timing of a signal transmission performed by a terminal is later than a termination timing of a discontinuous transmission (DTX) activity period of a base station, and obtaining a first determination result; and
performing a corresponding operation on a DTX activity period transmission performed by the base station based on the first determination result and a type of the signal transmission.

17. The method of claim 16, wherein performing the corresponding operation on the DTX activity period transmission performed by the base station based on the first determination result and the type of the signal transmission comprises:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DTX activity period transmission performed by the base station based on the second determination result.

18. The method of claim 17, wherein performing the corresponding operation on the DTX activity period transmission performed by the base station based on the second determination result comprises:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, adjusting the termination timing of the DTX activity period to be no earlier than a first timing; and
in case that the second determination result is that the reset timing of the inactivity timer of the DRX performed by the terminal is later than the termination timing of the DTX activity period of the base station, continuing to perform a DTX inactivity period transmission of the base station.

19. The method of claim 18, wherein the first timing satisfies one or more of the following conditions:
not earlier than a termination timing of a DRX activity period performed by the terminal; or
later than the termination timing of the DTX activity period of the base station and earlier than a termination timing of a DRX activity period performed by the terminal.

20. The method of claim 16, wherein performing the corresponding operation on the DTX activity period transmission performed by the base station based on the first determination result and the type of the signal transmission comprises:
in case that the first determination result is that the termination timing of the signal transmission is later than the termination timing of the DTX activity period of the base station, and the type of the signal transmission is one or more of the following types, performing the corresponding operation on the DTX activity period transmission performed by the base station:
physical downlink control channel (PDCCH) skipping transmission;
semi-persistent scheduling (SPS) transmission;
configured grant (CG) transmission;
physical random access channel (PRACH) transmission; or
paging transmission.

21. The method of claim 20, wherein performing the corresponding operation on the DTX activity period transmission performed by the base station based on the first determination result and the type of the signal transmission comprises:
in case that the first determination result is that the termination timing of the signal transmission is later than the termination timing of the DTX activity period of the base station, continuing to perform a DTX inactivity period transmission of the base station.

22. The method of claim 20, wherein performing the corresponding operation on the DTX activity period transmission performed by the base station based on the first determination result and the type of the signal transmission comprises:
in case that the first determination result is that the termination timing of the signal transmission is later than the termination timing of the DTX activity period of the base station, and the type of the signal transmission is PDCCH skipping transmission, notifying the terminal that the termination timing of the DTX activity period of the base station is not earlier than a termination timing of the PDCCH skipping transmission of the terminal.

23. The method of claim 20, wherein performing the corresponding operation on the DTX activity period transmission performed by the base station based on the first determination result and the type of the signal transmission comprises:
in case that the first determination result is that the termination timing of the signal transmission is later than the termination timing of the DTX activity period of the base station, and the type of the signal transmission is not PDCCH skipping transmission, adjusting the termination timing of the DTX activity period of the base station to be no earlier than a termination timing of a corresponding signal transmission.

24. The method of claim 20, wherein the termination timing of the signal transmission comprises one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

25. A terminal, comprising a memory, a transceiver, and a processor, wherein
the memory is used for storing a computer program; the transceiver is used for transmitting and receiving data under control of the processor; and the processor is used for reading the computer program in the memory and performing the following operations:
determining whether a termination timing of a signal transmission performed by a terminal is later than a termination timing of a discontinuous transmission (DTX) activity period of a base station, and obtaining a first determination result; and
performing a corresponding operation on the signal transmission based on the first determination result and a type of the signal transmission.

26. The terminal of claim 25, wherein performing the corresponding operation on the signal transmission based on the first determination result and the type of the signal transmission comprises:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DRX activity period transmission performed by the terminal based on the second determination result.

27. The terminal of claim 26, wherein performing the corresponding operation on the DRX activity period transmission performed by the terminal based on the second determination result comprises:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, continuing to perform the DRX activity period transmission; and/or,
in case that the second determination result is that the reset timing of the inactivity timer of the DRX performed by the terminal is later than the termination timing of the DTX activity period of the base station, interrupting or suspending the DRX activity period transmission.

28. The terminal of claim 27, wherein suspending the DRX activity period transmission comprises:
suspending the inactivity timer within a DTX inactivity period of the base station; and/or,
suspending a DRX activity period transmission within a timing duration of the inactivity timer within a DTX inactivity period of the base station.

29. The terminal of claim 27, wherein performing the corresponding operation on the DRX activity period transmission performed by the terminal based on the second determination result further comprises:
in case that the second determination result is that the reset timing of the inactivity timer of the DRX performed by the terminal is later than the termination timing of the DTX activity period of the base station, continuing to perform a DRX activity period transmission suspended within a timing duration of the inactivity timer within the DTX activity period of the base station.

30. The terminal of claim 27, wherein interrupting the DRX activity period transmission comprises:
interrupting the inactivity timer within a DTX inactivity period of the base station; and/or,
interrupting a DRX activity period transmission within a timing duration of the inactivity timer within a DTX inactivity period of the base station.

31. The terminal of claim 27, wherein performing the corresponding operation on the DRX activity period transmission performed by the terminal based on the second determination result further comprises:
in case that the second determination result is that the reset timing of the inactivity timer of the DRX performed by the terminal is later than the termination timing of the DTX activity period of the base station, restarting a new DRX activity period transmission within a timing duration of the inactivity timer within the DTX activity period of the base station.

32. The terminal of claim 27, wherein performing the corresponding operation on the DRX activity period transmission performed by the terminal based on the second determination result further comprises:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, performing one or more of the following operations:
terminating the inactivity timer within a DTX inactivity period of the base station;
not performing uplink data transmission within a DTX inactivity period of the base station;
not performing downlink data transmission within a DTX inactivity period of the base station;
suspending the inactivity timer within a DTX inactivity period of the base station; or
suspending a DRX activity period transmission within a timing duration of the inactivity timer within a DTX inactivity period of the base station.

33. The terminal of claim 25, wherein performing the corresponding operation on the signal transmission based on the first determination result and the type of the signal transmission comprises:
in case that the first determination result is that the termination timing of the signal transmission is later than the termination timing of the DTX activity period of the base station, and the type of the signal transmission is one or more of the following types, continuing to perform, interrupt or suspend the signal transmission:
physical downlink control channel (PDCCH) skipping transmission;
semi-persistent scheduling (SPS) transmission;
configured grant (CG) transmission;
physical random access channel (PRACH) transmission; or
paging transmission.

34. The terminal of claim 33, wherein performing the corresponding operation on the signal transmission based on the first determination result and the type of the signal transmission further comprises:
in case that the first determination result is that the termination timing of the signal transmission is later than the termination timing of the DTX activity period of the base station, and the type of the signal transmission is PDCCH skipping transmission, determining that the termination timing of the DTX activity period of the base station is not earlier than the termination timing of the signal transmission.

35. The terminal of claim 33, wherein interrupting the signal transmission comprises:
interrupting the signal transmission within a DTX inactivity period of the base station; and/or,
interrupting the signal transmission within the DTX activity period of the base station.

36. The terminal of claim 33, wherein after interrupting the signal transmission, the method further comprises:
restarting a new signal transmission within the DTX activity period of the base station.

37. The terminal of claim 33, wherein suspending the signal transmission comprises:
suspending the signal transmission within a DRX inactivity period of the base station.

38. The terminal of claim 33, wherein after suspending the signal transmission, the method further comprises:
continuing to perform the suspended signal transmission within the DTX activity period of the base station.

39. The terminal of claim 33, wherein the termination timing of the signal transmission comprises one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

40. A base station, comprising a memory, a transceiver, and a processor, wherein
the memory is used for storing a computer program; the transceiver is used for transmitting and receiving data under control of the processor; and the processor is used for reading the computer program in the memory and performing the following operations:
determining whether a termination timing of a signal transmission performed by a terminal is later than a termination timing of a discontinuous transmission (DTX) activity period of a base station, and obtaining a first determination result; and
performing a corresponding operation on a DTX activity period transmission performed by the base station based on the first determination result and a type of the signal transmission.

41. The base station of claim 40, wherein performing the corresponding operation on the DTX activity period transmission performed by the base station based on the first determination result and the type of the signal transmission comprises:
in case that the first determination result is that the termination timing of the signal transmission is later than the termination timing of the DTX activity period of the base station, and the type of the signal transmission is a discontinuous reception (DRX) activity period transmission, determining whether a reset timing or a termination timing of an inactivity timer of a DRX performed by the terminal is later than the termination timing of the DTX activity period of the base station, and obtaining a second determination result; and
performing a corresponding operation on the DTX activity period transmission performed by the base station based on the second determination result.

42. The base station of claim 41, wherein performing the corresponding operation on the DTX activity period transmission performed by the base station based on the second determination result comprises:
in case that the second determination result is that the reset timing of the inactivity timer of the DRX performed by the terminal is not later than the termination timing of the DTX activity period of the base station, or the second determination result is that the termination timing of the inactivity timer of the DRX performed by the terminal is later than the termination timing of the DTX activity period of the base station, adjusting the termination timing of the DTX activity period to be no earlier than a first timing; and
in case that the second determination result is that the reset timing of the inactivity timer of the DRX performed by the terminal is later than the termination timing of the DTX activity period of the base station, continuing to perform a DTX inactivity period transmission of the base station.

43. The base station of claim 42, wherein the first timing satisfies one or more of the following conditions:
not earlier than a termination timing of a DRX activity period performed by the terminal; or
later than the termination timing of the DTX activity period of the base station and earlier than a termination timing of a DRX activity period performed by the terminal.

44. The base station of claim 40, wherein performing the corresponding operation on the DTX activity period transmission performed by the base station based on the first determination result and the type of the signal transmission comprises:
in case that the first determination result is that the termination timing of the signal transmission is later than the termination timing of the DTX activity period of the base station, and the type of the signal transmission is one or more of the following types, performing the corresponding operation on the DTX activity period transmission performed by the base station:
physical downlink control channel (PDCCH) skipping transmission;
semi-persistent scheduling (SPS) transmission;
configured grant (CG) transmission;
physical random access channel (PRACH) transmission; or
paging transmission.

45. The base station of claim 44, wherein performing the corresponding operation on the DTX activity period transmission performed by the base station based on the first determination result and the type of the signal transmission comprises:
in case that the first determination result is that the termination timing of the signal transmission is later than the termination timing of the DTX activity period of the base station, continuing to perform a DTX inactivity period transmission of the base station.

46. The base station of claim 44, wherein performing the corresponding operation on the DTX activity period transmission performed by the base station based on the first determination result and the type of the signal transmission comprises:
in case that the first determination result is that the termination timing of the signal transmission is later than the termination timing of the DTX activity period of the base station, and the type of the signal transmission is PDCCH skipping transmission, notifying the terminal that the termination timing of the DTX activity period of the base station is not earlier than a termination timing of the PDCCH skipping transmission of the terminal.

47. The base station of claim 44, wherein performing the corresponding operation on the DTX activity period transmission performed by the base station based on the first determination result and the type of the signal transmission comprises:
in case that the first determination result is that the termination timing of the signal transmission is later than the termination timing of the DTX activity period of the base station, and the type of the signal transmission is not PDCCH skipping transmission, adjusting the termination timing of the DTX activity period of the base station to be no earlier than a termination timing of a corresponding signal transmission.

48. The base station of claim 44, wherein the termination timing of the signal transmission comprises one or more of the following timings:
a termination timing of data being transmitted within SPS transmission on a transmission occasion;
a termination timing of a last transmission occasion of SPS transmission;
a termination timing of data being transmitted within CG transmission on a transmission occasion;
a termination timing of a last transmission occasion of CG transmission;
a termination timing of data being transmitted within PRACH transmission on a random access channel (RACH) transmission occasion;
a termination timing of a random access channel (RACH) transmission occasion within an inactivity period of PRACH transmission;
a termination timing of data being transmitted within paging transmission on a paging transmission occasion; or
a termination timing of a paging transmission occasion within an inactivity period of paging transmission.

49. An apparatus for signal transmission, comprising:
a first determining module, used for determining whether a termination timing of a signal transmission performed by a terminal is later than a termination timing of a discontinuous transmission (DTX) activity period of a base station, and obtaining a first determination result; and
a first performing module, used for performing a corresponding operation on the signal transmission based on the first determination result and a type of the signal transmission.

50. An apparatus for signal transmission, comprising:
a second determining module, used for determining whether a termination timing of a signal transmission performed by a terminal is later than a termination timing of a discontinuous transmission (DTX) activity period of a base station, and obtaining a first determination result; and
a second performing module, used for performing a corresponding operation on a DTX activity period transmission performed by the base station based on the first determination result and a type of the signal transmission.

51. A computer-readable storage medium, wherein the computer-readable storage medium stores a computer program, and the computer program is used to cause a computer to perform the method for signal transmission of any one of claims 1 to 15, or the method for signal transmission of any one of claims 16 to 24.
